(19) Europäisches Patentamt
European Patent Office
Office européen des brevets

(11) **EP 3 034 993 B1**

(12) **EUROPÄISCHE PATENTSCHRIFT**

(45) Veröffentlichungstag und Bekanntmachung des Hinweises auf die Patenterteilung:
**09.11.2022 Patentblatt 2022/45**

(21) Anmeldenummer: **15200948.6**

(22) Anmeldetag: **17.12.2015**

(51) Internationale Patentklassifikation (IPC):
**G01B 11/25** (2006.01)

(52) Gemeinsame Patentklassifikation (CPC):
**G01B 11/2513**

(54) **VERFAHREN ZUR OPTISCHEN FORMERFASSUNG UND/ODER FORMPRÜFUNG EINES GEGENSTANDS UND BELEUCHTUNGSEINRICHTUNG**

METHOD FOR OPTICALLY DETECTING THE SHAPE AND/OR CHECKING THE SHAPE OF AN OBJECT AND LIGHTING DEVICE

PROCEDE DE DETERMINATION OPTIQUE DE FORME ET/OU DE VERIFICATION DE FORME D'UN OBJET ET DISPOSITIF D'ECLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2014 DE 102014226729**

(43) Veröffentlichungstag der Anmeldung:
**22.06.2016 Patentblatt 2016/25**

(73) Patentinhaber: **SAC Sirius Advanced Cybernetics GmbH**
**76227 Karlsruhe (DE)**

(72) Erfinder: **Wagner, Christoph**
**75196 Remchingen (DE)**

(74) Vertreter: **Kordel, Mattias et al**
**Gleiss Große Schrell und Partner mbB**
**Patentanwälte Rechtsanwälte**
**Leitzstrasse 45**
**70469 Stuttgart (DE)**

(56) Entgegenhaltungen:
DE-A1-102009 056 177    US-A- 4 657 394
US-A1- 2009 016 572    US-A1- 2013 016 338

**Beschreibung**

Die Erfindung betrifft ein Verfahren zur optischen Formerfassung und/oder Formprüfung eines Gegenstands sowie eine Beleuchtungseinrichtung.

Bei optischen Verfahren zur Formerfassung werden verschiedene Arten von strukturierten Beleuchtungen eingesetzt. Hierzu zählen unter anderem eine linienförmige Beleuchtung beim Laserlichtschnittverfahren und eine Beleuchtung mit einem periodischen Sinus- bzw. Cosinus-Muster bei der Streifenprojektion und der Deflektometrie. Ein Vergleich dieser Beleuchtungen zeigt, dass diese genau gegensätzlich zueinander sind. Eine Laserlinie ist maximal lokalisiert, während ein periodisches Muster, insbesondere ein periodisches Streifenmuster zur Projektion, dagegen bezüglich einer Ortskoordinate maximal ausgedehnt ist. Daraus ergibt sich, dass der Gegenstand bei der linienförmigen Beleuchtung relativ zur Laserlinie verschoben werden muss, um nacheinander eine sichtbare Oberfläche des Gegenstands an allen Orten zu erfassen. Bei der periodischen Beleuchtung muss der Gegenstand dagegen während einer Folge von periodischen Mustern stillstehen und es wird die gesamte sichtbare Oberfläche des Gegenstandes gleichzeitig erfasst. Dabei besteht ein Zusammenhang zur Heisenbergschen Unschärfebeziehung derart, dass je stärker ein Signal im Ortsbereich lokalisiert ist (geringe örtliche Unsicherheit), es im Frequenzbereich - hier im Ortsfrequenzbereich - desto ausgedehnter ist (hohe Unsicherheit im Frequenzraum) und umgekehrt. Ortsbereich und Frequenzbereich sind dabei über eine Fourier-Transformation miteinander verknüpft. Jede der bekannten Beleuchtungsarten weist Vor- und Nachteile auf. Dabei sind die verschiedenen Beleuchtungsarten auf ihre spezifischen Anwendungsgebiete hin abgestimmt. Es besteht kein vermittelnder Ansatz, welcher Vorteile beider Verfahren vereinigt.

Aus der US 2013/0016338 A1 ist ein Verfahren zum Ermitteln von dreidimensionalen Koordinaten eines Objektpunkts auf einer Oberfläche eines Objekts bekannt, umfassend folgende Schritte: Bereitstellen einer transparenten Platte mit einem ersten Bereich und einem zweiten Bereich, wobei der zweite Bereich einen anderen Keilwinkel als der erste Bereich aufweist; Teilen eines ersten Lichtstrahls in ein erstes Licht und ein zweites Licht; Senden des ersten Lichts durch den ersten Bereich oder den zweiten Bereich; Kombinieren des ersten Lichts und des zweiten Lichts, um ein Streifenmuster auf der Oberfläche des Objekts zu erzeugen, wobei der Abstand des Streifenmusters von dem Keilwinkel abhängt, durch welchen sich das erste Licht bewegt; Abbilden des Objektpunkts auf einem Anordnungspunkt auf einer fotosensitiven Anordnung, um einen elektrischen Datenwert zu erhalten; Ermitteln der dreidimensionalen Koordinaten des ersten Objektpunkts basierend zumindest teilweise auf dem elektrischen Datenwert.

Aus der US 4,657,394 A sind Phasenmessungen von verformten Gitterbildern bekannt, welche zur Durchführung einer verbesserten optischen Profilometrie verwendet werden. Einzelne Linienprofile werden in einer Reihe von Rotationsinkrementen eines Körpers erhalten. Hieraus kann ein vollständiges 360-Grad-Oberflächenprofil oder ein Teil davon erzeugt werden.

Aus der US 2009/0016572 A1 ist eine Technik, ein zugehöriges System, und ein Programmcode zum Abrufen von Tiefeninformationen über mindestens eine Oberfläche eines Objekts bekannt, beispielsweise ein anatomisches Merkmal. Die Kernmerkmale umfassen folgendes: Projizieren eines zusammengesetzten Bildes, das mehrere modulierte strukturierte Lichtmuster umfasst, auf das anatomische Merkmal; Erfassen eines von der Oberfläche reflektierten Bildes; und Wiederherstellen von Musterinformationen aus dem reflektierten Bild für jedes der modulierten strukturierten Lichtmuster. Die Musterinformation wird vorzugsweise für jedes modulierte strukturierte Lichtmuster wiederhergestellt, das zur Erzeugung des zusammengesetzten Bildes verwendet wird, indem eine Demodulation des reflektierten Bildes durchgeführt wird. Die Rekonstruktion der Oberfläche kann erreicht werden, indem Tiefeninformationen aus den wiederhergestellten Mustern verwendet werden, um eine Tiefenkarte/Abbildung davon zu erzeugen. Jede für die Modulation eines jeweiligen strukturierten Lichtmusters verwendete Signalwellenform unterscheidet sich von jeder der anderen Signalwellenformen, die zur Modulation anderer strukturierter Lichtmuster eines zusammengesetzten Bildes verwendet werden; diese Signalwellenformen können aus geeigneten Typen in irgendeiner Kombination verschiedener Signalwellenformen ausgewählt werden, vorausgesetzt, die verwendeten Wellenformen sind in Bezug zueinander unkorreliert. Die Tiefenkarte/Abbildung, die in einer Vielzahl von Anwendungen verwendet werden soll, zum Beispiel: Anzeigen einer 3-D-Ansicht des Objekts, Viritual-Reality-Benutzerinteraktionsschnittstelle mit einem computergestützten Gerät; Gesichts- oder andere Tiermerkmale oder unbelebte Objekterkennungs- und Vergleichsverfahren zur Sicherheits- oder Identifikationszwecken; und 3-D-Video-Telefonkonferenz/Telekollaboration.

Ferner ist der deutschen Offenlegungsschrift DE 10 2009 056 177 A1 eine Vorrichtung in einem Verfahren zur zwei- oder dreidimensionalen Vermessung makroskopischer, mikroskopischer oder submikroskopischer Oberflächentopografien mittels Profilometrie zu entnehmen. Es sollen bei Phasenschiebe-Profilometern Messfehler, die durch eine relative Bewegung zwischen Objekt und Messgerät während eines Messzyklus entstehen, kompensiert werden. Es wird weiterhin offenbart, dass ein Projektor eine ein integriertes Modulationsbild aufweisende Phasenschiebe-Mustersequenz auf ein Objekt projiziert. Mittels einer Datenverarbeitungseinrichtung können aufgrund einer Relativbewegung des Objekts zum Messgerät erzeugte Messfehler mittels einer der Relativbewegung entgegengesetzten nachträglichen Verschiebung von mittels der Bilddaten erzeugten Bildern kompensiert werden.

Der Erfindung liegt die Aufgabe zugrunde, ein Verfahren und eine Beleuchtungseinrichtung zu schaffen, wobei die genannten Nachteile nicht auftreten.

Die Aufgabe wird gelöst, indem die Gegenstände der nebengeordneten Ansprüche geschaffen werden. Vorteilhafte Ausgestaltungen ergeben sich aus den Unteransprüchen.

Die Aufgabe wird insbesondere gelöst, indem ein Verfahren zur optischen Formerfassung und/oder Formprüfung eines Gegenstands geschaffen wird, wobei eine strukturierte Beleuchtung zur Beleuchtung einer Gegenstandsoberfläche verwendet wird. Das Verfahren zeichnet sich dadurch aus, dass ein Bestrahlungsstärkeprofil der strukturierten Beleuchtung bereitgestellt wird, das auf einem durch eine Modulationsfunktion gemäß eines Modulationsverfahrens modulierten Trägersignal - auch als Trägerfunktion bezeichnet - beruht. Durch die Modulation ist es möglich, das Bestrahlungsstärkeprofil zu lokalisieren, ähnlich wie eine linienförmige Beleuchtung. Dadurch ist es möglich, eine Oberfläche eines sich bewegenden Gegenstands abschnittsweise nacheinander zu vermessen. Alternativ kann der Gegenstand auch stillstehen, und das Bestrahlungsstärkeprofil kann örtlich verschoben werden. Dies entspricht dann einem Phasenschieben in einem Streifenprojektionsverfahren. Es ist vorgesehen, ein periodisches Trägersignal zu wählen, sodass insgesamt eine periodische Struktur des Bestrahlungsstärkeprofils resultiert. Dies ermöglicht eine sehr präzise Lokalisierung von Verschiebungen der Bestrahlungsstärkeverteilung anhand einer Phasenlage des Trägersignals und/oder der Modulationsfunktion. Da diese Verschiebung sehr genau erfasst werden kann, kann auch die Form des Gegenstandes sehr genau erfasst werden. Es ist daher möglich, eine Messunsicherheit zu minimieren. Insgesamt ist es somit möglich, Gegenstände sowohl in Bewegung als auch im Stillstand mit minimaler Messunsicherheit zu erfassen. Dies gilt sowohl für eine Erfassung der Form, wie sie alternativ mit dem Laserlichtschnittverfahren und/oder der Streifenprojektion durchgeführt werden kann, als auch für eine Erfassung von Neigungen der Oberfläche, wie sie im Bereich der Deflektometrie durchgeführt wird.

Unter einem Trägersignal, das auch als Trägerfunktion bezeichnet wird, wird eine vorbestimmte, entlang mindestens einer Raum- und gegebenenfalls Zeitkoordinate nicht-konstante, das heißt insbesondere veränderliche oder variierende, Bestrahlungsstärke als Funktion der mindestens einen Raum- und gegebenenfalls Zeitkoordinate verstanden. Es ist demnach möglich, dass die Bestrahlungsstärke des Trägersignals entlang mindestens einer Ortskoordinate veränderlich ist oder variiert. Es ist auch möglich, dass die Bestrahlungsstärke entlang einer Mehrzahl von Ortskoordinaten variiert. Zusätzlich ist es möglich, dass die Bestrahlungsstärke des Trägersignals entlang einer Zeitkoordinate veränderlich ist oder variiert. Es ist auch möglich, dass die Bestrahlungsstärke des Trägersignals sowohl entlang mindestens einer Ortskoordinate als auch entlang einer Zeitkoordinate, das heißt mit der Zeit, variiert. Eine Variation oder Veränderung entlang einer Zeitkoordinate spricht dabei an, dass sich die Bestrahlungsstärke zeitlich verändert. Besonders bevorzugt ist das Trägersignal eine vorbestimmte Bestrahlungsstärke als Funktion im Ortsraum, insbesondere eine periodische Bestrahlungsstärke im Ortsraum. Aus dem zuvor Ausgeführten wird klar, dass das Trägersignal insbesondere keine einfache Strahlungswelle ist, bei welcher zwar ein elektrischer und ein magnetischer Feldvektor räumlich und zeitlich variieren, wobei jedoch die Bestrahlungsstärke einer solchen einfachen Strahlungswelle konstant ist, sondern dass vielmehr die Trägerfunktion oder das Trägersignal quasi selbst bereits eine Modulation einer einfachen Strahlungswelle aufweist, dergestalt, dass eben die Bestrahlungsstärke örtlich und gegebenenfalls zeitlich veränderlich ist.

Unter einer Modulationsfunktion wird eine Funktion verstanden, durch welche die örtliche und gegebenenfalls zeitliche Variation der Bestrahlungsstärke des Trägersignals verändert, nämlich insbesondere moduliert wird, wenn die Modulationsfunktion mit dem Trägersignal verknüpft wird. Dabei kann eine Verknüpfung insbesondere eine mathematische oder eine physikalische Verknüpfung sein. Entscheidend ist dabei letztlich weniger, wie das Bestrahlungsstärkeprofil der strukturierten Beleuchtung tatsächlich erzeugt wird, vielmehr kommt es darauf an, dass das bereitgestellte Bestrahlungsstärkeprofil sich als auf einem durch eine Modulationsfunktion gemäß einem Modulationsverfahren modulierten Trägersignal beruhend darstellen lässt.

Als Modulationsfunktion wird bevorzugt eine Funktion verwendet, welche eine Modulation des Trägersignals bezüglich dessen Amplitude, Phase und/oder Frequenz bewirkt, wenn die Modulationsfunktion mit dem Trägersignal verknüpft wird.

Weiterhin wird als Modulationsfunktion eine im Ortsraum gegebene Funktion verwendet, wobei die Modulationsfunktion bevorzugt von einer Ortkoordinate oder von einer Mehrzahl von Ortskoordinaten abhängt. Es ist möglich, dass die Modulationsfunktion zusätzlich von einer Zeitkoordinate abhängt. Vorzugsweise wird eine periodische Modulationsfunktion verwendet.

Dass das Bestrahlungsstärkeprofil auf einem Trägersignal beruht, welches durch eine Modulationsfunktion nach einem Modulationsverfahren moduliert ist, bedeutet insbesondere, dass das Bestrahlungsstärkeprofil durch eine entsprechende Berechnung erhalten wird. Es wird also bevorzugt nicht auf rein physikalischem Weg erzeugt, sondern vielmehr bevorzugt insbesondere numerisch entworfen, vorzugsweise durch Berechnung der Modulation eines Trägersignals mit einer Modulationsfunktion. Dabei wird als Trägersignal eine vorbestimmte Funktion einer Bestrahlungsstärke im Ortsraum verwendet, die eine periodische Funktion der Bestrahlungsstärke im Ortsraum ist. Die Funktion kann von einer eindimensionalen oder auch von einer mehrdimensionalen Ortskoordinate - im Sinne eines Vektors - abhängen. Es ist möglich, dass die Funktion zusätzlich von einer Zeitkoordinate abhängt. Dieses Trägersignal wird dann durch eine Modulationsfunktion, die ebenfalls im Ortsraum gegeben ist, moduliert, beispielsweise durch Multiplikation der Modulationsfunktion mit dem Trägersignal, oder in anderer geeigneter Weise. Die Modulationsfunktion hängt bevorzugt von einer eindimensionalen oder einer mehrdimensionalen Ortskoordinate - im Sinne eines Vektors - ab, insbesondere bevorzugt von denselben Ortskoordinaten, welche auch das Trägersignal als Argumente aufweist. Die Modulationsfunktion kann zusätzlich von einer Zeitkoordinate abhängen. Als Modulationsfunktion wird gemäß einer nicht beanspruchten Ausführungsform ebenfalls eine periodische Funktion im Ortsraum gewählt, wobei eine Periode der Modulationsfunktion vorzugsweise verschieden ist von einer Periode des Trägersignals. Insbesondere ist die Periode des Trägersignals vorzugsweise kleiner als die Periode der Modulationsfunktion. Es ist auch eine physikalische Realisierung eines erfindungsgemäßen Bestrahlungsstärkeprofils möglich.

Alternativ zu einer Berechnung des Bestrahlungsstärkeprofils im Ortsraum ist es auch möglich, dieses im Frequenzraum zu berechnen, wobei Orts- und Frequenzraum über eine Fourier-Transformation miteinander verknüpft sind. Dabei können sowohl die Modulationsfunktion als auch das Trägersignal im Frequenzraum angegeben werden.

Dass das Bestrahlungsstärkeprofil der strukturierten Beleuchtung bereitgestellt wird, bedeutet, dass dieses in einer Weise zugänglich gemacht wird, dass es auf eine Oberfläche des zu prüfenden oder zu erfassenden Gegenstands projiziert werden kann. Insbesondere ist es möglich, das Bestrahlungsstärkeprofil in Form einer Maske, beispielsweise einer Filtermaske oder holografischen Maske, bereitzustellen, wobei die Maske in einen Projektor einsetzbar ist, insbesondere derart, dass die Maske in dem Projektor hinterleuchtet wird, wobei das Bestrahlungsstärkeprofil, welches die Maske transmittiert - beispielsweise in Form auf oder in der Maske vorgesehener hellerer und dunklerer Bereiche - auf die Oberfläche des zu erfassenden oder zu prüfenden Gegenstands projiziert wird. Eine besonders einfache Ausgestaltung des Verfahrens sieht vor, dass das Bestrahlungsstärkeprofil in Form eines Dias bereitgestellt wird, welches in einen Diaprojektor eingesetzt wird, der zur Beleuchtung der Gegenstandsoberfläche verwendet wird. Es ist auch möglich, dass zur Beleuchtung der Gegenstandsoberfläche ein ansteuerbarer Projektor verwendet wird, insbesondere ein ansteuerbarer Projektor, der von einem Computer zur Projektion eines in dem Computer erzeugten oder hinterlegten Bildes ansteuerbar ist. Besonders bevorzugt handelt es sich bei dem ansteuerbaren Projektor um einen Videoprojektor, insbesondere um einen Beamer. Dabei kann das Bestrahlungsstärkeprofil als Bilddatei in einem Computer bereitgestellt werden, beispielsweise als Bitmap oder in anderer geeigneter Weise. Die Projektion des Bestrahlungsstärkeprofils mittels eines Videoprojektors, insbesondere eines Beamers, ist besonders flexibel. Sie kann insbesondere verwendet werden, um zeitlich variierende Bestrahlungsstärkeprofile zu projizieren, wobei der ansteuerbare Projektor insbesondere in Echtzeit ansteuerbar ist. Ein zeitlich variierendes Bestrahlungsstärkeprofil kann aber in besonders einfacher Weise auch mittels eines Filmprojektors projiziert werden, wobei das Bestrahlungsstärkeprofil beispielsweise in Form einer Filmrolle bereitgestellt werden kann. Ein zeitlich variierendes Bestrahlungsstärkeprofil kann auch mittels einer Beleuchtungseinrichtung verwirklicht werden, die einen drehbaren Spiegel, insbesondere einen Taumelspiegel oder einen Galvanometerscanner, aufweist. Vorteilhaft dabei ist, dass in einfacher und kostengünstiger Weise eine feste Maske verwendet werden kann, wobei die zeitliche Variation der Bestrahlungsstärke durch eine Drehung oder Verschwenkung des drehbaren Spiegels bewirkt wird.

Eine Ausführungsform des Verfahrens umfasst nicht nur-wie zuvor ausgeführt - die Schritte des Bereitstellens des Bestrahlungsstärkeprofils sowie des Beleuchtens des Gegenstands, insbesondere einer Oberfläche des Gegenstands, mit der strukturierten Beleuchtung, welche das

Bestrahlungsstärkeprofil aufweist, sondern vielmehr auch den Schritt des Erzeugens, insbesondere des Berechnens, des Bestrahlungsstärkeprofils.

Die Ausführungsform des Verfahrens umfasst zusätzlich auch den Schritt der optischen Formerfassung und/oder Formprüfung des mittels der strukturierten Beleuchtung beleuchteten Gegenstands.

Vorzugsweise wird das Bestrahlungsstärkeprofil durch eine Recheneinrichtung, insbesondere einen Computer, berechnet, wobei anschließend eine Maske, beispielsweise ein Dia, mit dem Bestrahlungsstärkeprofil durch eine mittels der Recheneinrichtung ansteuerbare Belichtungseinrichtung belichtet werden kann. Alternativ kann ein ansteuerbarer Projektor, insbesondere ein Videoprojektor, besonders bevorzugt ein Beamer, durch die Recheneinrichtung oder auch durch eine andere Recheneinrichtung mit dem Bestrahlungsstärkeprofil angesteuert werden, wobei es möglich ist, dass dieses zuvor in eine Bilddatei exportiert oder gespeichert wurde.

Es wird auch eine Ausführungsform des Verfahrens bevorzugt, bei welcher als Modulationsverfahren ein analoges Modulationsverfahren angewendet wird. Ein analoges Modulationsverfahren ist dabei insbesondere ein Verfahren, welches von einer analogen Modulationsfunktion Gebrauch macht. Eine analoge Modulationsfunktion ist insbesondere eine Funktion, die kontinuierlich - oder insbesondere bei Darstellung in oder durch eine Recheneinrichtung quasikontinuierlich - ist bezüglich ihrer Funktionswerte.

Zusätzlich oder alternativ wird im Rahmen des Verfahrens bevorzugt als Modulationsverfahren ein digitales Modulationsverfahren angewendet. Ein digitales Modulationsverfahren ist dabei insbesondere ein Verfahren, welches von einer digitalen Modulationsfunktion Gebrauch macht. Eine digitale Modulationsfunktion ist insbesondere eine Funktion, die diskret ist bezüglich ihrer Funktionswerte. Ein digitales Modulationsverfahren ist besonders einfach in einer Recheneinrichtung, insbesondere in einem Computer durchführbar, wobei es zugleich mit hoher Genauigkeit durchgeführt werden kann.

Als Trägersignal wird eine periodische Funktion verwendet.

Es wird auch eine Ausführungsform des Verfahrens bevorzugt, die sich dadurch auszeichnet, dass als Trägersignal ein Cosinus-förmiges oder ein Sinusförmiges Signal verwendet wird. Dabei handelt es sich um besonders einfache und gängige Trägersignale, sodass das Verfahren sowohl mathematisch als auch technisch einfach anwendbar ist.

Die Modulationsfunktion wird dazu verwendet, Perioden des Trägersignals voneinander unterscheidbar zu machen. Dabei zeigt sich, dass ein periodisches Trägersignal in unmoduliertem Zustand eine identische Abfolge von Perioden aufweist, die nicht voneinander unterscheidbar sind. Somit ist es nicht möglich, die verschiedenen Perioden des Trägersignals zu lokalisieren. Wird das Trägersignal durch eine Modulationsfunktion moduliert, können allerdings Perioden des Trägersignals voneinander unterschieden werden, sodass verschiedene Perioden des Trägers lokalisiert werden können. Hierdurch kann ein Eindeutigkeitsbereich einer Auswertung der mit dem Bestrahlungsstärkeprofil beleuchteten Oberfläche - insbesondere im Rahmen eines Streifenprojektionsverfahrens - erhöht werden. Somit steigt die Genauigkeit des Verfahrens zur optischen Formerfassung und/oder Formprüfung.

Es wird auch eine Ausführungsform des Verfahrens bevorzugt, die sich dadurch auszeichnet, dass zu dem Trägersignal ein Additionsterm oder Offset addiert wird, wobei der Additionsterm derart gewählt wird, dass eine Summe aus dem Trägersignal und dem Additionsterm keine negativen Funktionswerte annimmt. Bezieht sich das Trägersignal unmittelbar auf eine Helligkeit oder eine Bestrahlungsstärke, wird das Verfahren ohne weitere Schritte technisch erst ermöglicht, wenn das Trägersignal ausschließlich positive Werte oder den Wert Null annehmen kann. Dem Wert Null kann dann beispielsweise eine minimal mögliche Bestrahlungsstärke oder eine maximal mögliche Schwärzung zugewiesen werden, wobei die Helligkeit oder Bestrahlungsstärke mit steigenden positiven Werten des Trägersignals steigt. Mit einem solchen Signal ist es somit insbesondere sehr einfach möglich, eine Belichtungseinrichtung, welche eine Maske, beispielsweise ein Dia, belichtet, oder auch einen ansteuerbaren Projektor, insbesondere Videoprojektor, besonders bevorzugt einen Beamer, anzusteuern.

Es wird auch eine Ausführungsform des Verfahrens bevorzugt, die sich dadurch auszeichnet, dass als Modulationsverfahren ein Verfahren zur Amplitudenmodulation verwendet wird. Dies ist eine sowohl mathematisch einfache als auch technisch leicht durchführbare Ausgestaltung des Verfahrens.

Alternativ oder zusätzlich wird als Modulationsverfahren vorzugsweise ein Verfahren zur Frequenzmodulation verwendet. Dies stellt eine mathematisch komplexere, jedoch auch vielseitigere Ausgestaltung des Verfahrens dar, wobei es insbesondere möglich ist, auch sehr komplizierte Bestrahlungsstärkeprofile zu erzeugen.

Alternativ oder zusätzlich wird als Modulationsverfahren ein Verfahren zur Phasenmodulation verwendet. Dies ist mathematisch einfacher handhabbar als ein Verfahren zur Frequenzmodulation, wobei zugleich jedoch ähnlich komplexe und vielfältige Bestrahlungsstärkeprofile erzeugt werden können wie bei der Frequenzmodulation.

Bei dem Verfahren wird - vorzugsweise in einem analogen Modulationsverfahren - als Modulationsfunktion eine Gauss-förmige Funktion, eine Gauss-Funktion, oder eine näherungsweise Gauss-förmige Funktion verwendet. Dabei handelt es sich um eine einfache Modulationsfunktion, welche mathematisch leicht zu realisieren ist. Besonders bevorzugt wird eine Gauss-förmige Funktion oder eine näherungsweise Gauss-förmige Funktion endlicher Ausdehnung verwendet. Dabei ist es möglich, dass eine Gauss-Funktion an vorbestimmten Grenzwerten beschnitten wird, sodass sie per Definition endlich ausgedehnt ist. Alternativ ist es möglich, eine - insbesondere näherungsweise - Gauss-förmige Funktion mit endlicher Ausdehnung zu erzeugen, beispielsweise durch Faltung von vier identischen Rechteckfunktionen miteinander. Aus der Faltung resultiert eine Funktion, die einer Gauss-Funktion ähnlich ist, jedoch nur in einem endlichen Ausdehnungsbereich von Null verschiedene Werte aufweist. Dabei geht sie jedoch beidseitig stetig und differenzierbar gegen Null. Die Verwendung einer Gauss-förmigen Funktion endlicher Ausdehnung hat den Vorteil, dass das Verfahren mathematisch und auch technisch einfacher umsetzbar ist, als bei einer Gauss-Funktion oder Gauss-förmigen Funktion mit unendlicher Ausdehnung.

Alternativ ist bei einem nicht beanspruchten Verfahren vorgesehen, dass - vorzugsweise in einem analogen Modulationsverfahren - als Modulationsfunktion eine periodische Funktion, insbesondere eine Cosinus-förmige oder eine Sinus-förmige Funktion, verwendet wird. Hierbei handelt es sich um einfache, leicht zu berechnende, periodische Funktionen, die ohne großen Aufwand als Modulationsfunktion verwendet werden können. Eine periodische Modulationsfunktion hat insbesondere den Vorteil, dass in eindeutiger Weise verschiedene Perioden des Trägersignals voneinander unterschieden werden können.

Bei der nicht beanspruchten Ausführungsform wird besonders bevorzugt - vorzugsweise in einem analogen Modulationsverfahren - eine Cosinus-förmige oder eine Sinus-förmige Funktion als Modulationsfunktion verwendet, zu der ein Offset, also ein Additionswert, addiert wird, wobei der Offset dergestalt gewählt wird, dass die Modulationsfunktion keine negativen Funktionswerte annimmt. Dies hat insbesondere die Vorteile, die bereits in Zusammenhang mit einem nichtnegativen Trägersignal erläutert wurden. Insbesondere ist es vorteilhaft, wenn ein Trägersignal, welches keine negativen Werte annimmt, mit einer Modulationsfunktion moduliert wird, die ebenfalls keine negativen Werte annimmt.

Zusätzlich kann als Modulationsverfahren ein phase-shift keying-Verfahren (PSK) verwendet werden. Dabei wird das Trägersignal digital in seiner Phase moduliert. Bei dem phase-shift keying-Verfahren kann es sich zum Beispiel um ein binary phase-shift keying Verfahren (BPSK), um ein quadrature phase-shift keying-Verfahren (QPSK), oder um ein differential phase-shift keying-Verfahren (DPSK), handeln. Mittels dieser Verfahren sind sehr komplexe Bestrahlungsstärkeprofile berechenbar, die insbesondere eine eindeutige Unterscheidung verschiedener Streifenperioden voneinander erlauben.

Alternativ oder zusätzlich wird als Modulationsverfahren bevorzugt ein quadrature amplitude modulation-Verfahren (QAM) verwendet. Hierbei handelt es sich insbesondere um eine Kombination einer digitalen Amplituden- und Phasenmodulation. Dabei ist vorteilhaft, dass nicht nur zwei oder vier, sondern typischerweise mehr Zustände zur eindeutigen Identifizierung verschiedener Streifenperioden unterschieden werden können. Beispielsweise können beim 16-QAM-Verfahren sechzehn verschiedene Zustände mit nur einem Symbol unterschieden werden. Dies ist besonders vorteilhaft in Bezug auf ein Streifenprojektions- und/oder Lichtschnittverfahren und/oder die Deflektometrie, weil hier bereits mit nur einem Symbol sechzehn verschiedene Streifenperioden unterscheidbar gemacht werden können. Mit zwei Symbolen und/oder zwei aufeinanderfolgenden Streifen des Bestrahlungsstärkeprofils sind bereits 256 Streifenperioden unterscheidbar. Somit steigt die Eindeutigkeit und Genauigkeit des Verfahrens erheblich.

Es wird auch eine Ausführungsform des Verfahrens bevorzugt, die sich dadurch auszeichnet, dass es sich bei dem Verfahren zur Formerfassung oder Formprüfung um ein Lichtschnittverfahren handelt. Dabei sind in - im Vergleich zu bekannten Lichtschnittverfahren - genauerer Weise auch große Oberflächenbereiche eines Gegenstands bezüglich ihrer Form erfassbar. Bei einem Lichtschnittverfahren wird bevorzugt der zu prüfende Gegenstand mit der strukturierten Beleuchtung beleuchtet. Mit einer Matrixkamera werden Bilder des beleuchteten Gegenstands aufgenommen. Vorzugsweise wird dabei eine Relativbewegung zwischen dem Gegenstand, der Matrixkamera und/oder der Beleuchtung bewirkt. Bei einer besonders einfachen Ausführungsform des Verfahrens wird der Gegenstand bewegt, während die Kamera und die Beleuchtung in Ruhe sind. Es ist aber auch möglich, das Bestrahlungsstärkeprofil zu bewegen, wobei die Kamera und der Gegenstand in Ruhe sein können. Auch ist es möglich, die Kamera und die Beleuchtung gemeinsam zu bewegen, wobei der Gegenstand in Ruhe ist. Die Beleuchtung erfolgt aus einer Richtung, welche mit der Beobachtungsrichtung einen Winkel einschließt. Anhand des Triangulationsprinzips wird aus der Form und Lage des Bestrahlungsstärkeprofils auf die Form des Gegenstands geschlossen.

Alternativ oder zusätzlich handelt es sich bei dem Verfahren zur Formerfassung oder Formprüfung bevorzugt um ein Verfahren zur Streifenprojektion, insbesondere um ein Verfahren zur Streifenprojektion im Stillstand oder ein Verfahren zur Streifenprojektion in Bewegung des Gegenstands. Dabei ist es möglich, größere Oberflächenbereiche des Gegenstands mit gleichwohl lokal sehr hoher Messgenauigkeit und/oder Ortsauflösung zu erfassen. Bei einem Streifenprojektionsverfahren wird ein Gegenstand mit der strukturierten Beleuchtung beleuchtet. Dabei wird der Gegenstand insbesondere von einer zeitlichen Sequenz von Streifenmustern beleuchtet. Mittels einer Matrixkamera werden Bilder des beleuchteten Gegenstands aufgenommen. Bei einer bevorzugten Ausführungsform des Verfahrens ruht der Gegenstand relativ zu der Beleuchtung und der Matrixkamera. Alternativ ist es möglich, dass der Gegenstand relativ zu der Beleuchtung und der Kamera bewegt wird. Die Beleuchtung erfolgt aus einer Richtung, welche mit der Beobachtungsrichtung einen Winkel einschließt. Anhand des Triangulationsprinzips wird aus der deformierten Form und Lage des projizierten Bestrahlungsstärkeprofils auf die Form des Gegenstands geschlossen.

Alternativ oder zusätzlich handelt es sich bei dem Verfahren zur Formerfassung oder Formprüfung vorzugsweise um ein deflektometrisches Verfahren, insbesondere um ein Verfahren zur Deflektometrie im Stillstand oder um ein Verfahren zur Deflektometrie in der Bewegung. Auch ein solches Verfahren profitiert von der hohen Genauigkeit, welche das verwendete Bestrahlungsstärkeprofil gewährleistet, sowie von der Möglichkeit, auch große Oberflächenbereiche mit der entsprechenden Genauigkeit erfassen zu können.

Bei einem deflektometrischen Verfahren wird ein Gegenstand mit der strukturierten Beleuchtung beleuchtet. Mittels einer Matrixkamera werden Bilder des beleuchteten Gegenstands aufgenommen. Dabei wird hier bevorzugt - im Unterschied zur Streifenprojektion - üblicherweise kein Projektor eingesetzt, sondern eine flächig strahlende Beleuchtungseinrichtung, beispielsweise ein Monitor oder eine andere diffus strahlende Lichtquelle. Bei einem deflektometrischen Verfahren wird primär nicht die Form des zu vermessenden Gegenstands, sondern dessen lokale Neigung bestimmt. Diese Neigung besitzt zwei Freiheitsgrade, nämlich die Neigung in Richtung einer zweidimensionalen Ortskoordinate. Vorzugsweise wird daher eine strukturierte Beleuchtung eingesetzt, die in Abhängigkeit einer zweidimensionalen Ortskoordinate variiert. Bei einer bevorzugten Ausführungsform des Verfahrens ruht dabei der Gegenstand gegenüber der Beleuchtung und der Matrixkamera. In diesem Fall wird vorzugsweise eine strukturierte Beleuchtung verwendet, welche zusätzlich in Abhängigkeit von einer zeitlichen Koordinate variiert. Es wird auch eine Ausführungsform des Verfahrens bevorzugt, bei welcher sich der Gegenstand bei der Erfassung der Neigung in Bewegung befindet, insbesondere relativ zu der Matrixkamera und zu der Beleuchtung. In diesem Fall genügt zur Darstellung der strukturierten Beleuchtung eine statische Maske. Insbesondere bedarf es insoweit keiner zeitlichen Variation der strukturierten Beleuchtung. Dies ist besonders vorteilhaft, da eine solche Beleuchtung, insbesondere eine entsprechende Maske, sehr einfach und kostengünstig sein kann. Insbesondere kann es genügen, einen Druck eines geeigneten Bestrahlungsstärkeprofils herzustellen, welcher gegebenenfalls von einer oder mehreren Lichtquellen hinterleuchtet wird.

Schließlich wird eine Ausführungsform des Verfahrens bevorzugt, die sich dadurch auszeichnet, dass ein Bestrahlungsstärkeprofil verwendet wird, welches von einer eindimensionalen, einer zweidimensionalen oder einer mehrdimensionalen Ortskoordinate abhängt. Dabei ist es insbesondere möglich, die Form und/oder Neigung der Oberfläche des Gegenstands in verschiedenen Richtungen zu untersuchen, wobei zugleich hoch komplexe und hoch genaue Bestrahlungsstärkeprofile bereitgestellt werden können. Zusätzlich kann das Bestrahlungsstärkeprofil bevorzugt von einer Zeitkoordinate abhängen.

Dabei ist ein zeitlich variierendes Bestrahlungsstärkeprofil insbesondere vorteilhaft, um große Oberflächenbereiche untersuchen zu können, ohne den zu untersuchenden Gegenstand bewegen zu müssen. Vielmehr wird in diesem Fall bei stillstehendem Gegenstand bevorzugt das Bestrahlungsstärkeprofil zeitlich variiert.

Zur Erfindung gehört auch eine Verwendung einer strukturierten Beleuchtung nach einem der zuvor beschriebenen Ausführungsbeispiele, wobei die strukturierte Beleuchtung in einem Verfahren zur optischen Formerfassung und/oder Formprüfung eines Gegenstands verwendet wird. Die strukturierte Beleuchtung wird zur optischen Formerfassung und/oder Formprüfung des Gegenstands verwendet. Die strukturierte Beleuchtung wird zur Beleuchtung eines Gegenstands, insbesondere einer Oberfläche des Gegenstands, in einem Verfahren zur optischen Formerfassung und/oder Formprüfung verwendet.

Die Aufgabe wird auch gelöst, indem eine Beleuchtungseinrichtung geschaffen wird, die eingerichtet ist zur Beleuchtung eines Gegenstands mit einer strukturierten Beleuchtung nach einem der zuvor beschriebenen Ausführungsbeispiele. Dabei weist die Beleuchtungseinrichtung gemäß einem Ausführungsbeispiel eine Maske oder ein Dia auf, wobei die Maske oder das Dia eingerichtet ist, um ein Bestrahlungsstärkeprofil der strukturierten Beleuchtungzu transmittieren, beispielsweise durch das Vorsehen hellerer und dunklerer Bereiche in oder auf der Maske oder dem Dia. Alternativ oder zusätzlich weist die Beleuchtungseinrichtung vorzugsweise einen ansteuerbaren Projektor und eine Recheneinrichtung auf, wobei die Recheneinrichtung bevorzugt mit dem ansteuerbaren Projektor zur Ansteuerung des Projektors wirkverbunden ist, wobei die Recheneinrichtung eingerichtet ist, um den Projektor zur Projektion einer strukturierten Beleuchtung nach einem der zuvor beschriebenen Beispiele anzusteuern. Dabei ist es insbesondere möglich, dass auf der Recheneinrichtung eine die strukturierte Beleuchtung repräsentierende Datei, insbesondere eine Bilddatei, besonders bevorzugt ein Bitmap oder eine andere geeignete Datei, hinterlegt ist. Insbesondere zur Projektion einer zeitlich variablen strukturierten Beleuchtung kann die Recheneinrichtung auch eine Videodatei aufweisen, oder die Beleuchtungseinrichtung kann einen Filmprojektor aufweisen, insbesondere einen Filmprojektor, der mit einer Filmrolle ausgestattet ist, auf welcher das Bestrahlungsstärkeprofil in seiner zeitlichen Variation hinterlegt ist. Zusätzlich ist es möglich, dass die Beleuchtungseinrichtung einen drehbaren Spiegel, insbesondere einen Taumelspiegel oder einen Galvanometerscanner, aufweist. Vorteilhaft dabei ist insbesondere, dass für ein zeitlich variierendes Bestrahlungsstärkeprofil in einfacher und kostengünstiger Weise eine feste Maske verwendet werden kann, wobei die zeitliche Variation der Bestrahlungsstärke durch eine Drehung oder Verschwenkung des drehbaren Spiegels bewirkt wird.

Die Erfindung wird im Folgenden anhand der Zeichnung näher erläutert. Dabei zeigen:

Figur 1a)  ein Beispiel für ein linienförmiges Bestrahlungsstärkeprofil gemäß dem Stand der Technik im Ortsraum;
Figur 1b)  das linienförmige Bestrahlungsstärkeprofil gemäß Figur 1a) im Frequenzraum;
Figur 2a)  ein bekanntes, periodisches Bestrahlungsstärkeprofil im Ortsraum;
Figur 2b)  das Bestrahlungsstärkeprofil gemäß Figur 2a) im Frequenzraum;
Figur 3a)  ein erstes Ausführungsbeispiel eines Bestrahlungsstärkeprofils im Ortsraum;
Figur 3b)  das Bestrahlungsstärkeprofil gemäß Figur 3a) im Frequenzraum;
Figur 4a)  ein zweites nicht beanspruchtes Ausführungsbeispiel eines Bestrahlungsstärkeprofils im Ortsraum;
Figur 4b)  das Bestrahlungsstärkeprofil gemäß Figur 4a) im Frequenzraum;
Figur 5a)  ein drittes Ausführungsbeispiel eines Bestrahlungsstärkeprofils im Ortsraum;
Figur 5b)  ein viertes Ausführungsbeispiel eines Bestrahlungsstärkeprofils im Ortsraum;
Figur 6  ein fünftes Ausführungsbeispiel eines Bestrahlungsstärkeprofils im Ortsraum, und
Figur 7  ein sechstes Ausführungsbeispiel eines Bestrahlungsstärkeprofils im Ortsraum.

Insbesondere anhand der Figuren zeigt sich nun Folgendes:
Linienförmige Beleuchtung beim Laserlichtschnittverfahren
Bei einem Laserlichtschnittverfahren wird zur Beleuchtung eines zu vermessenden Gegenstandes herkömmlicherweise eine schmale Laserlinie eingesetzt. Eine Matrixkamera beobachtet den von der Laserlinie beleuchteten Gegenstand und nimmt Bilder davon auf. Die Beleuchtung erfolgt aus einer Richtung, welche mit der Beobachtungsrichtung einen Winkel einschließt. Anhand des Triangulationsprinzips wird aus der Form und Lage der Laserlinie an der Oberfläche auf die Form des Gegenstandes geschlossen. Das Bestrahlungsstärkeprofil der Laserlinie in Abhängigkeit von einer eindimensionalen Ortkoordinate $x$ kann wie folgt beschrieben werden. Eine Abhängigkeit von einer oder mehreren weiteren Koordinate $y$, $z$, insgesamt also von einer mehrdimensionalen Ortskoordinate im Sinne eines Vektors, und/oder einer Zeitkoordinate $t$ wird aus Gründen der Vereinfachung zunächst nicht betrachtet, ist aber erfindungsgemäß ebenso umfasst. Es wird von einer idealisierten, unendlich schmalen Linie ausgegangen, welche das folgende Bestrahlungsstärkeprofil besitzt:

$$e_1(x) = e_0 \cdot \delta(x) \qquad (1)$$

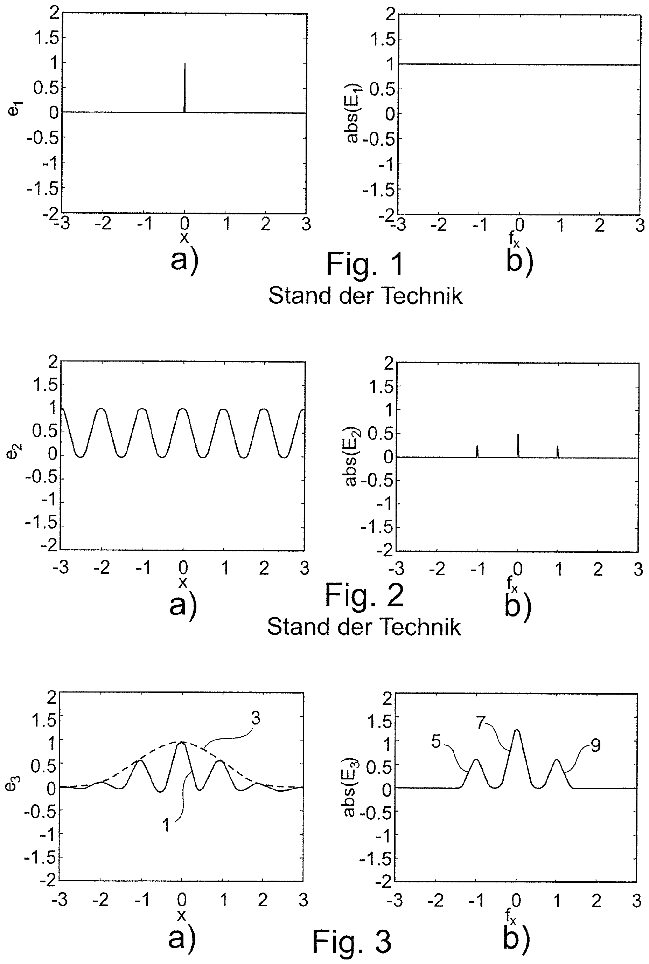

Hierbei ist $e_0$ ein Proportionalitätsfaktor und $\delta(x)$ die Dirac-Distribution. Figur 1a) zeigt diese bekannte Verteilung im Ortsbereich mit beliebigen Einheiten. Alle Figuren weisen im Folgenden Graphen mit beliebigen Einheiten auf. Ohne Beschränkung der Allgemeinheit wurde für die grafische Darstellung ein Proportionalitätsfaktor $e_0$ mit dem Wert 1 angenommen.

Die hierzu korrespondierende Fourier-Transformierte im Ortsfrequenzraum ist

$$E_1(f_x) = e_0 \qquad (2)$$

Figur 1b) zeigt diese konstante, reellwertige, unendlich ausgedehnte Funktion mit konstantem Wert. Zur unendlich schmalen Bestrahlungsstärkeverteilung in Richtung der Ortskoordinate x korrespondiert also eine unendlich breite Verteilung bezüglich der Ortsfrequenzkoordinate $f_x$.

Man kann auch sagen, dass die Bestrahlungsstärkeverteilung bezüglich der x-Koordinate maximal lokalisiert und bezüglich der Ortsfrequenzkoordinate $f_x$ maximal ausgedehnt ist.

Periodische Beleuchtung beim Streifenprojektionsverfahren und der Deflektometrie

Beim Streifenprojektionsverfahren und Verfahren der Deflektometrie wird zur Beleuchtung eines zu vermessenden Gegenstandes in für sich genommen bekannter Weise ein periodisches Streifenmuster eingesetzt. Eine Matrixkamera beobachtet den vom Streifenmuster beleuchteten Gegenstand und nimmt Bilder davon auf. Die Beleuchtung erfolgt aus einer Richtung, welche mit der Beobachtungsrichtung einen Winkel einschließt. Anhand des Triangulationsprinzips wird aus der deformierten Form und Lage des projizierten Streifenmusters auf die Form des Gegenstandes geschlossen. Das Bestrahlungsstärkeprofil des Streifenmusters in Abhängigkeit von der Ortkoordinate x kann wie folgt beschrieben werden. Die Streifen besitzen üblicherweise einen Sinus- oder Cosinus-förmigen Verlauf mit einer Ortsfrequenz $f_{x0}$ und werden in ihrer Phasenlage variiert, beispielsweise um 0°, 90°, 180° und 270°. Das Muster kann für die Phasenlage von 0° wie folgt dargestellt werden. Da die Bestrahlungsstärke physikalisch keine negativen Werte annehmen kann, wird zur Cosinus-Funktion ein Offset, Additionsterm oder Gleichanteil derart addiert, dass keine negativen Funktionswerte vorkommen. Das Bestrahlungsstärkeprofil lautet

$$e_2(x) = e_0 \cdot \left( \frac{1}{2} + \frac{1}{2} \cdot c \cdot \cos(2\pi f_{x0} x) \right) \qquad (3)$$

Hierbei ist $e_0$ ein Proportionalitätsfaktor und c eine Konstante. Die Konstante c kann verschiedene Werte annehmen, vorzugsweise Werte zwischen -1 und 1, besonders bevorzugt nimmt sie die Werte 1 oder -1 an.

Figur 2a zeigt das Bestrahlungsstärkeprofil im Ortsbereich. Ohne Beschränkung der Allgemeinheit wurde für die grafische Darstellung ein Proportionalitätsfaktor $e_0$ mit dem Wert 1 und eine Konstante c mit dem Wert 1 angenommen. Diese Verteilung im Ortsraum korrespondiert zu folgender Verteilung im Ortsfrequenzraum.

$$E_2(f_x) = e_0 \cdot \left( \frac{1}{2} \delta(f_x) + \frac{1}{4} \cdot c \cdot \delta(f_x - f_{x0}) + \frac{1}{4} \cdot c \cdot \delta(f_x + f_{x0}) \right) \qquad (4)$$

Figur 2b zeigt diese Verteilung, welche aus drei Dirac-förmige Impulsen bei den Ortsfrequenzen $f_x = f_{x0}$, $f_x = -f_{x0}$ und $f_x = 0$ besteht. Zur unendlich breiten Bestrahlungsstärkeverteilung in Richtung der Ortskoordinate x korrespondiert also eine unendlich schmale Verteilung bezüglich der Ortsfrequenzkoordinate $f_x$.

Man kann auch sagen, die Bestrahlungsstärkeverteilung ist bezüglich der x-Koordinate maximal ausgedehnt und bezüglich der Ortsfrequenzkoordinate $f_x$ maximal lokalisiert.

Die periodische Struktur der Verteilung im Ortsbereich ermöglicht eine Phasenauswertung. Eine Verschiebung des Musters bezüglich der Ortskoordinate x entspricht einer Variation der Phase.

Vergleich der Verfahren

Wenn man beide Verfahren - Lichtschnitt und Streifenprojektion - miteinander vergleicht, sind diese genau gegensätzlich zueinander. Die Laserlinie ist maximal lokalisiert, das periodische Streifenmuster dagegen maximal ausgedehnt, jeweils bezüglich der Ortskoordinate x.

Dies hat zur Folge, dass bei der linienförmigen Beleuchtung der Gegenstand relativ zur Laserlinie verschoben werden muss, um nacheinander die sichtbare Oberfläche des Gegenstands an allen Orten zu erfassen.

Bei der periodischen Beleuchtung dagegen muss der Gegenstand während der Folge von periodischen Mustern stillstehen und es wird die gesamte sichtbare Oberfläche des Gegenstandes gleichzeitig erfasst.

Es besteht ein Zusammenhang zur Heisenbergschen Unschärfebeziehung. Je stärker ein Signal im Ortsbereich lokalisiert ist (geringe örtliche Unsicherheit), umso ausgedehnter ist das Signal im Frequenzbereich (hohe Unsicherheit im Frequenzraum) und umgekehrt.

Strukturierte Beleuchtung mit Gauss-förmiger Einhüllenden

Ein erstes Ausführungsbeispiel eines erfindungsgemäßen strukturierten Bestrahlungsstärkeprofils weist eine Gauss-förmige Einhüllende auf. Die Gauss-Funktion besitzt folgende Eigenschaften:
Einerseits ist die Gauss-Funktion im Bereich um ihren Mittelwert lokalisiert. Ein Maß für diesen Bereich der Funktion, bei dem hohe Funktionswerte angenommen werden, stellt die Standardabweichung $\sigma$ dar. Andererseits reicht die Funktion aber auch exponentiell abfallend bis ins Unendliche. Die Gauss-Funktion ist damit sowohl in bestimmten Bereichen lokalisiert als auch unendlich ausgedehnt. Sie stellt einen Kompromiss dar zwischen scharf begrenzter Lokalisation und unendlicher Ausdehnung.

Mehr noch, die Gauss-Funktion hat die Eigenschaft, dass ihre Fourier-Transformierte wieder eine Funktion vom selben Typ, nämlich eine Gauss-Funktion darstellt. Wie für alle anderen Funktionen gilt auch für die Gauss-Funktion die Heisenbergsche Unschärfebeziehung. Eine Gauss-Funktion, welche im Ortsbereich eng lokalisiert ist, also eine geringe örtliche Unsicherheit besitzt (kleine Standardabweichung $\sigma$ im Ortsbereich), ist im Frequenzbereich weniger eng lokalisiert und weist eine hohe Unsicherheit bezüglich der Ortsfrequenz auf (große Standardabweichung $\Sigma$ im Frequenzbereich).

Bei dem ersten Ausführungsbeispiel des Bestrahlungsstärkeprofils moduliert die Gauss-förmige Einhüllende vorzugsweise eine Cosinus-förmige Funktion als Trägersignal. Das Bestrahlungsstärkeprofil bezüglich der Ortskoordinate x kann dann wie folgt beschrieben werden.

$$e_3(x) = e_0 \cdot exp\left(-\frac{x^2}{2\sigma^2}\right)\left(\frac{1}{2} + \frac{1}{2} \cdot c \cdot cos(2\pi f_{x0}x)\right) \qquad (5)$$

Die Konstante c kann verschiedene Werte annehmen, vorzugsweise Werte zwischen -1 und 1, besonders bevorzugt nimmt sie die Werte 1 oder -1 an. Alternativ ist es möglich, Cosinus-Funktionen oder Sinus-Funktionen mit anderer Phasenlage als Trägerfunktion zu verwenden.

Alternativ oder zusätzlich ist es möglich, die Einhüllende auf die Cosinus-Funktion, nicht aber auf den Offset wirken zu lassen:

$$e_3{}'(x) = e_0 \cdot \left(\frac{1}{2} + \frac{1}{2} \cdot c \cdot exp\left(-\frac{x^2}{2\sigma^2}\right) \cdot cos(2\pi f_{x0}x)\right) \qquad (6)$$

Figur 3a zeigt das mit dem Bezugszeichen 1 gekennzeichnete, periodisch variierende Bestrahlungsstärkeprofil $e_3(x)$ sowie dessen Gauss-förmige Einhüllende 3 in strichlierter Form. Diese Verteilung im Ortbereich korrespondiert zu folgender Verteilung im Ortsfrequenzraum. Hierbei ist $\Sigma$ die Standardabweichung der Gauss-Funktion bezüglich der Ortsfrequenzkoordinate. Das Sternsymbol steht für eine Faltungsoperation.

$$E_3(f_x) = \sqrt{2\pi} \cdot \sigma \cdot e_0 \cdot exp\left(-\frac{f_x^2}{2\Sigma^2}\right) * \left(\frac{1}{2}\delta(f_x) + \frac{1}{4} \cdot c \cdot \delta(f_x - f_{x0}) + \frac{1}{4} \cdot c \cdot \delta(f_x + f_{x0})\right) \qquad (7)$$

$$\Sigma = \frac{1}{2\pi\sigma} \qquad (8)$$

Figur 3b zeigt drei Gauss-förmige Verteilungen 5, 7, 9 mit den Mittenfrequenzen bei $f_x = f_{x0}$, $f_x = -f_{x0}$ und $f_x = 0$. Zu dem lokal ausgedehnten Bestrahlungsstärkeprofil mit der charakteristischen Breite $\sigma$ in Richtung der Ortskoordinate x korrespondiert also eine lokal ausgedehnte Verteilung mit der charakteristischen Breite $\Sigma$ bezüglich der Ortsfrequenz-

koordinate $f_x$.

Damit besitzt dieses Ausführungsbeispiel vorteilhafte Eigenschaften der beiden bekannten Beleuchtungsarten. Es ist einerseits lokalisiert wie die linienförmige Beleuchtung und ermöglicht damit die Oberfläche des Gegenstandes in der Bewegung nacheinander zu vermessen. Alternativ kann der Gegenstand still stehen und das Bestrahlungsstärkeprofil kann örtlich verschoben werden, was dem Phasenschieben bei der bekannten Beleuchtungsart in der Streifenprojektion entspricht.

Andererseits ist das Bestrahlungsstärkeprofil periodisch. Die Periodizität ist vorteilhaft, da sie eine sehr präzise Lokalisation von Verschiebungen des Bestrahlungsstärkeprofils anhand der Phasenlage des Signals ermöglichen. Je genauer diese Verschiebung erfasst werden kann, umso genauer kann auch eine Form eines zu prüfenden oder zu vermessenden Gegenstandes erfasst werden. Die Messunsicherheit kann minimiert werden.

Zusammenfassend ist es damit also möglich, Gegenstände in der Bewegung oder im Stillstand mit minimaler Messunsicherheit zu erfassen. Dies gilt sowohl für die Erfassung der Form, wie sie alternativ mit dem Laserlichtschnittverfahren und der Streifenprojektion durchgeführt werden kann, als auch für die Erfassung von Neigungen, wie sie mit der Deflektometrie durchgeführt wird.

Alternativ kann eine näherungsweise Gauss-förmige Verteilung mit endlicher Ausdehnung verwendet werden. Eine solche Verteilung entsteht beispielsweise durch Multiplikation einer Gauss-Funktion mit einer endlich ausgedehnten Funktion oder alternativ durch mehrfache Faltung derselben Rechteckfunktion, insbesondere eine vierfache Faltung derselben Rechteckfunktion:

$$rect\left(\frac{x}{x_1}\right) * rect\left(\frac{x}{x_1}\right) * rect\left(\frac{x}{x_1}\right) * rect\left(\frac{x}{x_1}\right) \qquad (9)$$

Hierbei ist $x_1$ die Breite der Rechteckfunktion. Eine solche näherungsweise Gauss-förmige Funktion hat den Vorteil, dass sie die wesentlichen Eigenschaften der Gauss-Funktion besitzt, dabei aber nur eine endliche Ausdehnung hat und daher technisch leichter realisiert werden kann.

Strukturierte Beleuchtung durch Modulation der Amplitude (AM)

Alternativ oder zusätzlich zu einer Gauss-förmigen Einhüllenden können bevorzugt auch andere Hüllfunktionen verwendet werden. Bei der Amplitudenmodulation in der Nachrichtentechnik wird ein Trägersignal in seiner Amplitude moduliert. Das Trägersignal hat hier - physikalisch bedingt - meist den Mittelwert Null. In der Nachrichtentechnik wird die Modulation des Trägers dazu benutzt um Nachrichten zu übertragen.

Vergleichbar hierzu kann auch bei einer strukturierten Beleuchtung ein Trägersignal in seiner Amplitude moduliert werden. Die betrachtete Größe ist hier in der Regel die örtliche Bestrahlungsstärkeverteilung. Anders als in der Nachrichtentechnik wird die Modulation nicht dazu benutzt, Nachrichten zu übertragen, sondern um das Bestrahlungsstärkeprofil zu lokalisieren. Speziell bei periodischen Trägersignalen dient die Modulation dazu, die ansonsten identischen Perioden des Trägersignals voneinander unterschieden zu können. Speziell bei der Streifenprojektion und der Deflektometrie wird hierdurch der Eindeutigkeitsbereich erhöht. Weiter abweichend von der Nachrichtentechnik handelt es sich bei der strukturierten Beleuchtung um ein Trägersignal und/oder eine Modulationsfunktion, welche in Abhängigkeit zumindest einer eindimensionalen Ortskoordinate variiert. Das Trägersignal und/oder die Modulationsfunktion können in Abhängigkeit von einer eindimensionalen Ortskoordinate variieren. Dies wird insbesondere für das Lichtschnittverfahren und die Streifenprojektion bevorzugt. Alternativ können das Trägersignal und/oder die Modulationsfunktion in Abhängigkeit von zwei- oder mehrdimensionalen Ortskoordinaten variieren. Insbesondere für das Verfahren der Deflektometrie wird eine Abhängigkeit von einer zweidimensionalen Ortskoordinate bevorzugt, da hier die Neigungen in Richtung einer zweidimensionalen Ortskoordinate bestimmt werden sollen. Zusätzlich kann/können das Trägersignal und/oder die Modulationsfunktion in Abhängigkeit von einer Zeitkoordinate variieren. Insbesondere für das Verfahren der Streifenprojektion wird die Abhängigkeit von zumindest einer eindimensionalen Ortskoordinate und einer Zeitkoordinate bevorzugt.

Ebenfalls abweichend zur Nachrichtentechnik ist das Trägersignal physikalisch bedingt größer oder gleich Null. Dies führt zu einer leicht abweichenden, aber dennoch weitgehend ähnlichen Beschreibung für die strukturierte Beleuchtung durch Addition eines Offsets. Als Trägersignal wird im Folgenden ein periodisches Signal, insbesondere ein Cosinus-förmiges Signal angenommen. Das Bestrahlungsstärkeprofil kann dann wie folgt beschrieben werden.

$$e_4(x) = e_0 \cdot a(x) \cdot \left(\frac{1}{2} + \frac{1}{2} \cdot c \cdot \cos(2\pi f_{x0} x)\right) \qquad (10)$$

Alternativ ist es möglich, die amplitudenmodulierte strukturierte Beleuchtung wie folgt zu beschreiben:

$$e_4'(\text{x}) = e_0 \cdot \left(\frac{1}{2} + \frac{1}{2} \cdot a(\text{x}) \cdot c \cdot \cos(2\pi f_{\text{x}0}\text{x})\right) \qquad (11)$$

Die Form der Einhüllen, also die Modulations- oder Amplitudenfunktion

$$a(x) \qquad (12)$$

kann unterschiedliche Formen annehmen und kann durch unterschiedliche Funktionen repräsentiert werden. In einer nicht beanspruchten Ausführungsform, kann die Einhüllende beispielsweise einen periodischen, insbesondere einen Cosinus- oder Sinus-förmigen Verlauf oder beliebige andere Verläufe annehmen.

Als ein nicht beanspruchtes Ausführungsbeispiel für eine verbesserte Form der Streifenprojektion wird eine Cosinus-förmige Trägerfunktion mit einer Cosinus-förmigen Einhüllenden vorgeschlagen. Das Bestrahlungsstärkeprofil lautet:

$$e_4(x) = e_0 \cdot \left(\frac{1}{2} + \frac{1}{2} \cdot c_1 \cdot cos(2\pi f_{x1}x)\right) \cdot \left(\frac{1}{2} + \frac{1}{2} \cdot c \cdot cos(2\pi f_{x0}x)\right) \qquad (13)$$

Hierbei besitzt die Trägerfunktion die Frequenz $f_{x0}$ und die Konstante $c$, die Einhüllende die Frequenz $f_{x1}$ und die Konstante $c_1$. Die Konstanten $c$ und $c_1$ können verschiedene Werte annehmen, vorzugsweise Werte zwischen -1 und 1, besonders bevorzugt nehmen sie einzeln oder gemeinsam die Werte 1 und/oder -1 an. Vorzugsweise ist die Frequenz $f_{x0}$ der Trägerfunktion höher als die Frequenz $f_{x1}$ der Einhüllenden. Die periodische Wiederholung des Verlaufs der Trägerfunktion wird durch die Einhüllende verändert. Damit kann eine Periode der Cosinus-förmigen Trägerfunktion von ihrer Nachbarperiode unterschieden werden. Die verschiedenen Perioden des Trägers können lokalisiert und der Eindeutigkeitsbereich der Streifenprojektion erhöht werden.

Besonders bevorzugt wird ein Fall, bei dem die Frequenz der Trägerfunktion folgende Werte annimmt:

$$f_{x0} = (8n \pm 2) \cdot f_{x1} \quad \text{mit} \quad n = 1, 2, 3 \dots \qquad (14)$$

In einer Periode der Einhüllenden sind somit 6 oder 10, 14 oder 18 Perioden usw. der Trägerfunktion enthalten. Bei einer äquidistanten Abtastung an acht Stellen $x_0$, ..., $x_7$ innerhalb einer Periode der Einhüllenden ermöglicht dies, die Position der Abtastung relativ zur Bestrahlungsstärkeverteilung auf einfache Weise zu ermitteln. Die acht Abtastwerte sind gegeben durch

$$e_4(x_0) \qquad\qquad\qquad e_4(x_4)$$

$$e_4(x_1) \qquad\qquad\qquad e_4(x_5)$$

$$e_4(x_2) \qquad\qquad\qquad e_4(x_6)$$

$$e_4(x_3) \qquad\qquad\qquad e_4(x_7)$$

Aufgrund der achtfachen, äquidistanten Abtastung innerhalb einer Periode der Einhüllenden sind die Ortspunkte $x_0$ und $x_4$, $x_1$ und $x_5$, $x_2$ und $x_6$, sowie $x_3$ und $x_7$ stets 180° zueinander phasenverschoben - bei 360° für eine volle Periode der Einhüllenden. Benachbarte Abtastpunkte im Ortsraum, beispielsweise $x_0$ und $x_1$, sind gerade 45° zueinander phasenverschoben bezüglich der Einhüllenden. Die Einhüllende kann daher rekonstruiert und lokalisiert werden durch die Werte

$$e_4(x_0) - e_4(x_4)$$

$$e_4(x_1) - e_4(x_5)$$

$$e_4(x_2) - e_4(x_6)$$

$$e_4(x_3) - e_4(x_7)$$

Da gemäß Gleichung (14) um 180° zueinander phasenverschobene Abtastwertpaare wie $x_0$ und $x_4$, $x_1$ und $x_5$, $x_2$ und $x_6$, sowie $x_3$ und $x_7$ jeweils dieselbe Phase des Trägersignals aufweisen, erhält man bei der zuvor genannten Differenzbildung keine Information über das Trägersignal, sondern ausschließlich Informationen über die Einhüllende. Dagegen enthält eine entsprechende Summation immer gerade - bis auf einen Faktor 2 - den Mittelwert der Einhüllenden multipliziert mit dem jeweiligen Funktionswert des Trägersignals, sodass die Summen lediglich Informationen über das Trägersignal umfassen. Das Trägersignal kann daher rekonstruiert und lokalisiert werden durch die Werte

$$e_4(x_0) + e_4(x_4)$$

$$e_4(x_1) + e_4(x_5)$$

$$e_4(x_2) + e_4(x_6)$$

$$e_4(x_3) + e_4(x_7)$$

Durch die Differenzbildung einerseits und die Summenbildung andererseits kann somit insgesamt eine Separation von Modulationsfunktion und Trägersignal durchgeführt werden, sodass insbesondere Phaseninformationen über beide Funktionen erhalten werden können.

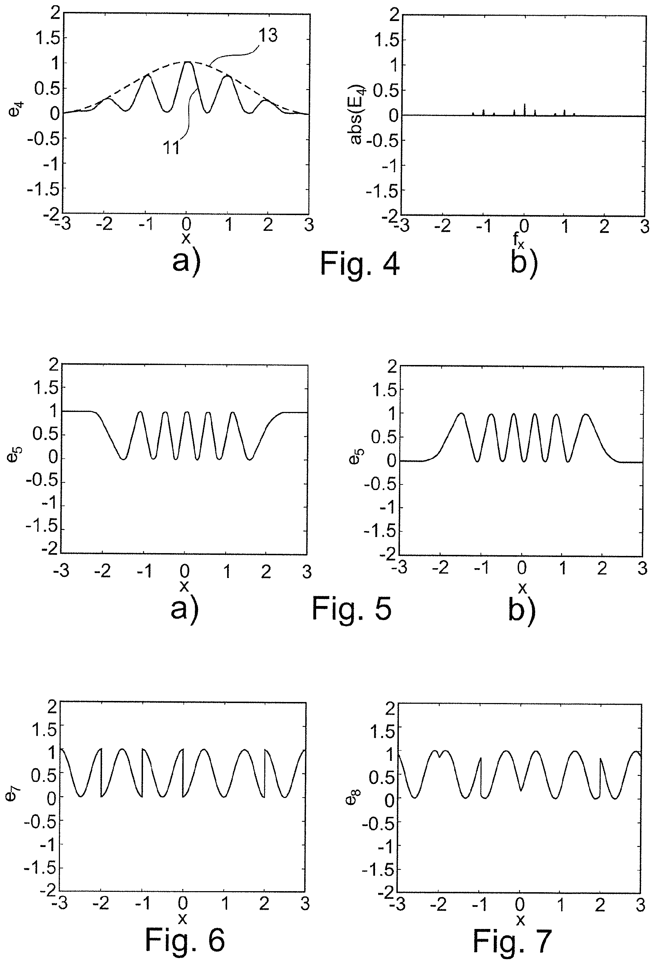

Figur 4a zeigt ein nicht beanspruchtes Ausführungsbeispiel eines solchen periodisch variierenden Bestrahlungsstärkeprofils $e_4(x)$ mit dem Bezugszeichen 11 sowie - gestrichelt - dessen Cosinus-förmige Einhüllende 13, wobei Figur 4b das zugehörige Spektrum darstellt.

Strukturierte Beleuchtung durch Modulation der Frequenz (FM) oder der Phase (PM)

Alternativ oder zusätzlich kann das Trägersignal in seiner Frequenz und/oder Phase moduliert werden, ähnlich der Frequenzmodulation und der Phasenmodulation in der Nachrichtentechnik. Wie bei der bereits oben beschriebenen Amplitudenmodulation der strukturierten Beleuchtung nimmt auch bei der Frequenzmodulation und der Phasenmodulation das Trägersignal - physikalisch bedingt - nur Werte größer oder gleich Null an. Als Trägersignal wird im Folgenden ein Cosinus-förmiges Signal angenommen. Das Bestrahlungsstärkeprofil lautet dann

$$e_5(x) = e_0 \cdot \left( \frac{1}{2} + \frac{1}{2} \cdot c \cdot cos\left(2\pi f_{x0} x + \varphi(x)\right) \right) \qquad (15)$$

Die Phasenfunktion

$$\varphi(x) \qquad (16)$$

kann unterschiedliche Formen annehmen und kann durch unterschiedliche Funktionen repräsentiert werden. Die Frequenzänderung $\Delta f(x)$ des modulierten Signals gegenüber der Trägerfrequenz ist gegeben durch die Ableitung der Phasenfunktion nach der Ortskoordinate $x$:

$$\Delta f(x) = \frac{\partial}{\partial x}\varphi(x) \qquad\qquad (17)$$

Dies stellt den Zusammenhang dar zwischen einer Frequenzmodulation und der Phasenmodulation. Eine Phasenmodulation mit einer differenzierbaren Phasenfunktion kann daher auch als Frequenzmodulation interpretiert werden.

Insbesondere kann die Phasenfunktion durch eine Cosinus-förmige oder Sinus-förmige Funktion gegeben sein. Die Frequenzänderung, also die Ableitung dieser Phasenfunktion ist dann wiederum eine Sinus-förmige bzw. Cosinus-förmige Funktion. Das Bestrahlungsstärkeprofil lautet dann

$$e_5(x) = e_0 \cdot \left( \frac{1}{2} + \frac{1}{2} \cdot c \cdot cos\left(2\pi \cdot f_{x0} \cdot x + m \cdot \frac{f_{x0}}{f_{x1}} \cdot sin(2\pi \cdot f_{x1} \cdot x)\right)\right) \quad (18)$$

Hier ist m ein konstanter Faktor welcher den Modulationsgrad bestimmt. Dieser nimmt vorzugsweise Werte zwischen -1 und 1, besonders bevorzugt die Werte 1 oder -1 an. Figur 5a zeigt ein solches Ausführungsbeispiel eines periodischen Bestrahlungsstärkeprofils $e_5(x)$ mit variierender Frequenz für $m = 1$ und $c = 1$.

Besonders bevorzugt wird ein Bestrahlungsstärkeprofil mit $c = -1$. Figur 5b zeigt ein solches Ausführungsbeispiel eines periodischen Bestrahlungsstärkeprofils $e_5'(x)$ mit variierender Frequenz, dessen Funktionswerte am Rand der Periode der Modulationsfunktion verschwinden.

Bei den beschriebenen Modulationsverfahren AM, FM und PM kann es sich bei der Modulationsfunktion bevorzugt um eine analoge Funktion handeln. Bevorzugt ist die Modulationsfunktion dann kontinuierlich bezüglich der von ihr angenommenen Werte.

Bevorzugt sind aber. auch Modulationsverfahren, bei denen als Modulationsfunktion eine digitale Funktion verwendet wird. Bevorzugt ist die Modulationsfunktion dann diskret bezüglich der von ihr angenommenen Werte.

Strukturierte Beleuchtung durch digitale Modulation

Diskrete Modulationsverfahren ebenso wie analoge Modulationsverfahren greifen in der Regel zurück auf eine Modulation der Amplitude, der Frequenz und/oder der Phase. Im Folgenden werden einige besonders bevorzugte Modulationsverfahren zur Erzeugung einer erfindungsgemäßen strukturierten Beleuchtung angepasst. Es gibt drei Hauptgruppen von digitalen Modulationsverfahren:

- Amplitude-shift keying (ASK)
- Frequency-shift keying (FSK)
- Phase-shift keying (PSK)

Phase-shift keying (PSK)

Beim Phase-shift keying (PSK) wird ein Trägersignal digital in seiner Phase moduliert.

Binary phase-shift keying (BPSK)

Im einfachsten Fall werden zwei diskrete Phasenwerte verwendet, welche die digitalen Werte 0 und 1 repräsentieren. Angewandt auf eine strukturierte Beleuchtung kann ein bevorzugtes Bestrahlungsstärkeprofil beispielsweise formuliert werden als

$$e_7(x) = e_0 \cdot \left( \frac{1}{2} + \frac{1}{2} \cdot c \cdot cos(2\pi f_{x0} x + \pi n)\right), \;\; n = 0,1 \qquad (20)$$

Dabei ist $n$ insbesondere eine Funktion der Ortskoordinate $x$. Dabei wechselt der Wert von $n$ bevorzugt nach jeder ganzen Periode der Trägerfunktion. Es ist aber auch eine abweichende Ausgestaltung von $n$ als Funktion der Ortskoordinate $x$ möglich. Insbesondere könnte ein Wert von $n$ auch zufällig in Abhängigkeit von der Ortskoordinate $x$ erzeugt werden, wobei jedoch die verschiedenen Werte in ihrer Abhängigkeit von $x$ bekannt sein müssen, um die Phase des Bestrahlungsstärkeprofils zuordnen zu können. Alternativ können Werte von $n$ auch deterministisch in Abhängigkeit von der Ortskoordinate x erzeugt werden.

Figur 6 zeigt ein solches BPSK-Signal $e_7(x)$ als Bestrahlungsstärkeprofil.

Quadrature phase-shift keying (QPSK)

Besonders bevorzugt wird das quadrature phase-shift keying, bei dem vier diskrete Phasenwerte verwendet werden, welche jeweils vier unterschiedliche Zustände, entsprechend zwei Bits, repräsentieren. Angewandt auf eine strukturierte Beleuchtung kann das Bestrahlungsstärkeprofil beispielsweise formuliert werden als

$$e_8(x) = e_0 \cdot \left( \frac{1}{2} + \frac{1}{2} \cdot c \cdot \cos \left( 2\pi f_{x0} x + \frac{\pi}{4}(2n+1) \right) \right), \quad n = 0, 1, 2, 3 \quad (21)$$

Dabei ist $n$ - wie zuvor erläutert - wiederum eine Funktion der Ortskoordinate x.

Figur 7 zeigt ein solches QPSK-Signal $e_8(x)$ als Bestrahlungsstärkeprofil.

Besonders vorteilhaft bei dieser Modulationsart ist, dass sie sich mit ihren vier Phasenwerten sehr gut anwenden lässt für die Streifenprojektion oder die Deflektometrie, bei der üblicherweise vier verschiedene Phasenwerte bezüglich der Zeit verwendet werden. Das Streifenprojektionsverfahren kann vorteilhaft mit diesem Modulationsverfahren sowohl für stillstehende Objekte (zeitliches Phasenschieben) als auch für bewegte Objekte (räumliches Phasenschieben) angewandt werden. Hierzu wird insbesondere auf die Patentanmeldung EP 1 949 673 A1 verwiesen. Das Streifenprojektionsverfahren für bewegte Gegenstände kann dann auch als ein Lichtschnittverfahren mit einem speziell strukturierten Bestrahlungsstärkeprofil interpretiert werden.

Das kontinuierliche Cosinus-förmige Trägersignal wird im Rahmen des erfindungsgemäßen Streifenprojektionsverfahrens, der Deflektometrie bzw. des erfindungsgemäßen Lichtschnittverfahrens dazu verwendet, die genaue Phasenlage festzustellen. Die digitale Modulation des Trägersignals dient dazu, die ansonsten periodischen Cosinus-Streifen voneinander unterscheiden zu können und zu lokalisieren. Vorzugsweise werden die Perioden des Cosinus-förmigen Trägersignals mit unterschiedlichen digitalen Codes voneinander unterscheidbar und lokalisierbar gemacht.

Sollen maximal vier Streifenperioden voneinander unterschieden werden können, genügen die vier Zustände des QPSK, die in einer Streifenperiode enthalten sind. Mit dem Auslesen von zwei aufeinanderfolgenden Streifenperioden können bereits 4 · 4 = 16 Streifen voneinander unterschieden werden. Das Mehrdeutigkeitsproblem der Streifenprojektion mit Cosinus-förmigen Streifenmustern kann dadurch vorteilhaft gelöst werden.

Differential phase-shift keying (DPSK)

Das differential phase-shift keying (DPSK) ist eine Variante des PSK, bei der nicht die absoluten Phasenwerte als Symbole interpretiert werden, sondern die Änderung der Phase. Dies kann für die strukturierte Beleuchtung angewandt werden, da hier die absoluten Phasenwerte a priori in der Regel nicht bekannt sind. Vielmehr enthalten sie die Information über die Form des zu vermessenden Gegenstandes.

Quadrature amplitude modulation (QAM)

Bei der quadrature amplitude modulation handelt es sich um eine Kombination von digitaler Amplituden- und Phasenmodulation. Vorteilhaft bei diesem Modulationsverfahren ist, dass hier nicht nur zwei oder vier, sondern typischerweise mehr Zustände unterschieden werden können. Beim 16-QAM können 16 verschiedene Zustände unterschieden werden. Besonders vorteilhaft ist dies in Bezug auf das erfindungsgemäße Streifenprojektions- und/oder Lichtschnittverfahren und/oder die Deflektometrie, weil hier bereits mit nur einem Symbol 16 verschiedene Streifenperioden unterscheidbar gemacht werden können. Mit zwei Symbolen bzw. 2 aufeinanderfolgenden Streifen sind dies bereits 256 Streifenperioden.

Anwendung einer erfindungsgemäßen strukturierten Beleuchtung für das Lichtschnittverfahren

Beim Lichtschnittverfahren wird ein erfindungsgemäßes strukturiertes Bestrahlungsstärkeprofil verwendet, das den zu vermessenden Gegenstand beleuchtet. Eine Matrixkamera beobachtet den beleuchteten Gegenstand und nimmt Bilder des Gegenstandes auf, während dieser sich bevorzugt relativ zur Kamera und zur Beleuchtung bewegt. Die Beleuchtung erfolgt aus einer Richtung, welche mit der Beobachtungsrichtung einen Winkel einschließt. Anhand des Triangulationsprinzips wird aus der Form und Lage des strukturierten Bestrahlungsstärkeprofils auf die Form des Gegenstandes geschlossen.

Bevorzugt wird hierbei eine strukturierte Beleuchtung mit einer Gauss-förmigen, nahezu Gauss-förmigen (beansprucht) oder Cosinus-förmigen (nicht beansprucht) Einhüllenden des Bestrahlungsstärkeprofils oder mit einer anderen (nicht beansprucht) Einhüllenden eingesetzt, insbesondere im Sinne einer Amplitudenmodulation. Bevorzugt variiert das Bestrahlungsstärkeprofil in Abhängigkeit einer eindimensionalen Ortskoordinate und ist konstant bezüglich der Zeitkoordinate.

Ebenso bevorzugt wird eine strukturierte Beleuchtung nach dem Prinzip der Frequenz- und/oder Phasenmodulation eingesetzt, insbesondere der Phasenmodulation mit einer Sinus- oder Cosinus-förmigen Phasenfunktion, insbesondere derart, dass die Funktionswerte am Rand eines streifenförmigen Bereiches verschwinden.

Ebenso bevorzugt wird eine Beleuchtung mit einem digital modulierten Signal. Vorteilhaft bei diesen Kombinationen ist, dass die Beleuchtung auf einen streifenförmigen Bereich, insbesondere einen schmalen streifenförmigen Bereich eingeschränkt werden kann, da die Funktionswerte des Bestrahlungsstärkeprofils außerhalb dieses Bereichs verschwinden. Alternativ ist es möglich bei einer nicht beanspruchten Ausführungsform, mehrere Perioden bezüglich einer periodischen Einhüllenden oder Phasen- bzw. Frequenzfunktion zu verwenden.

Die aufnehmende Matrixkamera kann ganz, bevorzugt aber auch nur teilweise im Bereich eines Streifens ausgelesen werden, insbesondere eines Streifens, der die Breite des Bestrahlungsstärkeprofils zuzüglich der Verschiebung desselben, welche sich durch den zu erfassenden Höhenbereich ergibt, aufweist. Alternativ kann auch ein Streifen erfasst werden, dessen Breite der Periode der Einhüllenden und/oder der Periode der Phasenmodulation/Frequenzmodulation entspricht. Ein solches teilweises Auslesen der Matrixkamera kann in kürzerer Zeit erfolgen als das Auslesen der gesamten Matrixkamera und hat daher Geschwindigkeitsvorteile.

Ein weiterer Vorteil dieser erfindungsgemäßen Kombinationen besteht darin, dass zur Erzeugung des Bestrahlungsstärkeprofils anders als bei einem Muster, welches durch eine Laserlinie gegeben ist, bevorzugt eine zeitlich inkohärente Lichtquelle, insbesondere eine LED-Lichtquelle verwendet werden kann. Eine inkohärente Beleuchtung hat den Vorteil, dass kohärentes Specklerauschen, welches sich in zufälligen Variationen der erfassten Bestrahlungsstärke des Bestrahlungsstärkeprofils äußert, minimiert werden kann. Dadurch kann die Messunsicherheit der Formmessung ganz wesentlich reduziert werden.

Ein weiterer Vorteil besteht darin, dass zur Beleuchtung bevorzugt ein sehr einfach aufgebauter Projektor verwendet werden kann, wenn ein zeitlich konstantes Bestrahlungsstärkeprofil zu projizieren ist. Insbesondere kann hierfür ein kostengünstiger und einfach aufgebauter LED-Projektor mit einer fest vorgegebenen Maske verwendet werden. Die Maske enthält ein Urbild des gewünschten Bestrahlungsstärkeprofils, welches durch den Projektor auf den zu vermessenden Gegenstand abgebildet wird.

Alternativ kann aber bevorzugt auch eine Laserlichtquelle, insbesondere eine Halbleiterlaserlichtquelle, mit einer strahlformenden Optik verwendet werden, um das gewünschte Bestrahlungsstärkeprofil zu erzeugen. Hierfür kommen insbesondere diffraktive Optiken - auf Beugung beruhend - und refraktive Optiken - auf Lichtbrechung beruhend - in Frage. Bei den diffraktiven Optiken können insbesondere holografische Masken verwendet werden, um das gewünschte Bestrahlungsstärkeprofil zu erzeugen.

Weiter wird die Messunsicherheit dadurch reduziert, dass die Lokalisation von mehreren Perioden des Trägersignals mit einer geringeren Messunsicherheit erfolgen kann, als dies für eine einfache Linie der Fall ist. Hierfür können insbesondere geeignete Filteralgorithmen zum Einsatz kommen.

Ein weiterer Vorteil besteht darin, dass Glanzstellen des zu vermessenden Gegenstandes bei dem erfindungsgemäßen Verfahren das Messergebnis in geringerem Maß verfälschen, als dies bei einer einfachen Linie der Fall ist. Insbesondere die Frequenzmodulation und die Phasenmodulation sind wenig anfällig gegenüber solchen Verfälschungen, die hauptsächlich die Amplitude des Signals betreffen.

Anwendung einer erfindungsgemäßen strukturierten Beleuchtung für das Streifenprojektionsverfahren

Beim Streifenprojektionsverfahren wird zur Beleuchtung eine erfindungsgemäße strukturierte Beleuchtung eingesetzt. Eine Matrixkamera beobachtet den von einer zeitlichen Sequenz von Streifenmustern beleuchteten Gegenstand und nimmt Bilder davon auf. Bevorzugt ruht dabei der Gegenstand gegenüber der Beleuchtung und der Kamera. Alternativ kann sich der Gegenstand aber auch in Bewegung befinden. Die Beleuchtung erfolgt aus einer Richtung, welche mit der Beobachtungsrichtung einen Winkel einschließt.

Anhand des Triangulationsprinzips wird aus der deformierten Form und Lage des projizierten Musters auf die Form des Gegenstandes geschlossen.

Bevorzugt wird hierbei eine strukturierte Beleuchtung mit einer Gauss-förmigen, nahezu Gauss-förmigen (beansprucht) oder Cosinus-förmigen (nicht beansprucht) Einhüllenden des Bestrahlungsstärkeprofils oder mit einer anderen Einhüllenden (nicht beansprucht) eingesetzt, im Sinne einer Amplitudenmodulation. Das Bestrahlungsstärkeprofil variiert bevorzugt in Abhängigkeit einer eindimensionalen Ortskoordinate und variiert bei stillstehendem Gegenstand auch bezüglich der Zeitkoordinate. Vorzugsweise ergibt sich die strukturierte Beleuchtung zu unterschiedlichen Zeitpunkten durch die örtliche Verschiebung eines Musters zu einem vorgegebenen Zeitpunkt. Bei einem Gegenstand in Bewegung kann das Bestrahlungsstärkeprofil bezüglich der Zeitkoordinate konstant sein. Besonders bevorzugt wird bei einem nicht beanspruchten Ausführungsbeispiel ein Bestrahlungsstärkeprofil mit Cosinus-förmiger oder Sinusförmiger Einhüllenden. Besonders bevorzugt wird das Bestrahlungsstärkeprofil zeitlich so variiert, dass das Muster von einem Zeitpunkt der Beleuchtung und der Bildaufnahme zu einem folgenden Zeitpunkt der Beleuchtung und der Bildaufnahme um eine äquidistante Strecke verschoben wird. Besonders bevorzugt wird bei einem nicht beanspruchten Ausführungsbeispiel eine Verschiebung um ein Achtel der Periode der Einhüllenden.

Es ist so eine besonders einfache Auswertung möglich.

Besonders vorteilhaft bei dieser Art der Beleuchtung ist es, dass eine Erfassung mit einer geringen Anzahl von Mustern in der Sequenz möglich ist, insbesondere mit einer Sequenz aus nur 8 Mustern. Dies hat den Vorteil, dass die Messzeit minimiert werden kann, insbesondere dann wenn eine Kamera mit geringer Bildaufnahmezeit verwendet wird, insbesondere eine CMOS-Matrixkamera. Damit ist es möglich, eine dreidimensionale Erfassung in kürzester Zeit, insbesondere aber in Echtzeit zu ermöglichen. Damit ist es möglich, Gegenstände zu erfassen, welche nicht starr sind. Insbesondere ist es dadurch möglich, dreidimensionale Bildfolgen zu erfassen und dreidimensionale Vidoesequenzen oder Filme zu erfassen.

Bevorzugt wird ebenso eine strukturierte Beleuchtung nach dem Prinzip der Frequenz- und/oder Phasenmodulation, insbesondere der Phasenmodulation mit einer Sinus- oder Cosinus-förmigen Phasenfunktion.

Ebenso bevorzugt wird eine Beleuchtung mit einem digital modulierten Signal.

Vorzugsweise wird zur Beleuchtung ein Projektor eingesetzt. Für die Projektion eines zeitlich variablen Bestrahlungsstärkeprofils wird vorzugsweise ein digital arbeitender Projektor eingesetzt. Besonders bevorzugt sind hierbei Projektoren, welche als Kernkomponente ein digitales Mikrospiegel-Gerät (digital micromirror device) enthalten. Besonders bevorzugt werden dabei solche Projektoren, die eine hohe Bildwiederholrate erlauben.

Alternativ kann das Bestrahlungsstärkeprofil zeitlich konstant sein und der Gegenstand bewegt werden. In diesem Fall kann ein einfach aufgebauter Projektor mit einer festen Maske verwendet werden, wie dies beim Lichtschnittverfahren der Fall ist. Das Streifenprojektionsverfahren mit einer erfindungsgemäßen strukturierten Beleuchtung und bewegtem Gegenstand kann als äquivalent zum Lichtschnittverfahren mit einer erfindungsgemäßen strukturierten Beleuchtung betrachtet werden.

Anwendung einer erfindungsgemäßen strukturierten Beleuchtung für ein deflektometrisches Verfahren

Bei einem deflektometrischen Verfahren wird zur Beleuchtung eine erfindungsgemäße strukturierte Beleuchtung eingesetzt. Eine Matrixkamera beobachtet den von der strukturierten Beleuchtung beleuchteten Gegenstand und nimmt Bilder davon auf. Im Unterschied zur Streifenprojektion wird hier üblicherweise kein Projektor, sondern eine flächig strahlende Beleuchtung, beispielsweise ein Monitor oder eine andere diffus strahlende Lichtquelle eingesetzt.

Bei den deflektometrischen Verfahren wird primär nicht die Form des zu vermessenden Gegenstandes, sondern dessen lokale Neigung bestimmt. Diese Neigung besitzt zwei Freiheitsgrade, nämlich die Neigung in Richtung einer zweidimensionalen Ortskoordinate. Bevorzugt wird daher eine strukturierte Beleuchtung eingesetzt, die in Abhängigkeit einer zweidimensionalen Ortskoordinate variiert. Bevorzugt ruht dabei der Gegenstand gegenüber der Beleuchtung und der Kamera. In diesem Fall wird eine strukturierte Beleuchtung bevorzugt, welche zusätzlich in Abhängigkeit von einer zeitlichen Koordinate variiert.

Besonders bevorzugt befindet sich der Gegenstand bei der Erfassung der Neigung in Bewegung. In diesem Fall genügt zur Darstellung der strukturierten Beleuchtung beispielsweise eine statische Maske. Dies ist besonders vorteilhaft, da diese Maske sehr einfach und kostengünstig sein kann. Insbesondere kann es genügen, einen Druck eines geeigneten Musters herzustellen, welcher gegebenenfalls von einer oder mehreren Lichtquellen hinterleuchtet wird.

Insgesamt zeigt sich, dass die erfindungsgemäße strukturierte Beleuchtung vorteilhaft für verschiedene Verfahren zur Formerfassung und/oder Formprüfung eingesetzt werden kann.

**Patentansprüche**

1. Verfahren zur optischen Formerfassung und/oder Formprüfung eines Gegenstands, wobei eine strukturierte Beleuchtung verwendet wird, wobei ein Bestrahlungsstärkeprofil der strukturierten Beleuchtung bereitgestellt wird, das auf einem durch eine Modulationsfunktion gemäß eines Modulationsverfahrens modulierten Trägersignal basiert, wobei

   - als Trägersignal eine periodische Funktion mit einer Abfolge von Perioden verwendet wird, wobei
   - als Modulationsfunktion eine Gauss-Funktion, eine Gauss-förmige Funktion oder eine näherungsweise Gauss-förmige Funktion verwendet wird, wobei
   - die Modulationsfunktion eine im Ortsraum gegebene Funktion ist, durch welche die örtliche Variation der Bestrahlungsstärke des Trägersignals verändert wird, und
   - ein Lichtschnittverfahren, ein Verfahren zur Streifenprojektion, und/oder ein Verfahren zur Deflektometrie durchgeführt wird,

**dadurch gekennzeichnet, dass**

- die Modulationsfunktion dazu verwendet wird, Perioden des Trägersignals voneinander unterscheidbar zu machen.

2. Verfahren nach Anspruch 1, **dadurch gekennzeichnet, dass** als Modulationsverfahren ein analoges Modulationsverfahren verwendet wird.

3. Verfahren nach einem der vorhergehenden Ansprüche, **dadurch gekennzeichnet, dass** als Modulationsverfahren ein digitales Modulationsverfahren verwendet wird.

4. Verfahren nach einem der vorangehenden Ansprüche, **dadurch gekennzeichnet, dass** als Trägersignal ein Cosinus-förmiges oder Sinusförmiges Signal verwendet wird.

5. Verfahren nach einem der vorangehenden Ansprüche, **dadurch gekennzeichnet, dass** zum Trägersignal ein Offset addiert wird, insbesondere ein Offset derart, dass die Summe aus Trägersignal und Offset keine negativen Funktionswerte annimmt.

6. Verfahren nach einem der vorangehenden Ansprüche, **dadurch gekennzeichnet, dass** als Modulationsverfahren ein Verfahren zur Amplitudenmodulation, ein Verfahren zur Frequenzmodulation, und/oder ein Verfahren zur Phasenmodulation verwendet wird.

7. Verfahren nach einem der vorangehenden Ansprüche, **dadurch gekennzeichnet, dass** als Modulationsfunktion eine näherungsweise Gauss-förmige Funktion endlicher Ausdehnung verwendet wird, wobei vorzugsweise als Modulationsverfahren ein analoges Modulationsverfahren verwendet wird.

8. Verfahren nach einem der vorangehenden Ansprüche, **dadurch gekennzeichnet, dass** als Modulationsverfahren zusätzlich ein digitales Modulationsverfahren, ein phase-shift keying-Verfahren (PSK), ein binary phase-shift keying-Verfahren (BPSK), ein quadrature phase-shift keying-Verfahren (QPSK), ein differential phase-shift keying-Verfahren (DPSK), und/oder ein quadrature amplitude modulation-Verfahren (QAM) verwendet wird.

9. Verfahren nach einem der vorangehenden Ansprüche, **dadurch gekennzeichnet, dass** es sich bei dem Verfahren zur Formerfassung um ein Lichtschnittverfahren im Stillstand oder ein Lichtschnittverfahren in der Bewegung, um ein Verfahren zur Streifenprojektion im Stillstand oder ein Verfahren zur Streifenprojektion in der Bewegung, und/oder um ein Verfahren zur Deflektometrie im Stillstand oder ein Verfahren zur Deflektometrie in der Bewegung, handelt.

10. Verfahren nach einem der vorangehenden Ansprüche **dadurch gekennzeichnet, dass** ein Bestrahlungsstärkeprofil verwendet wird, das eine Funktion einer eindimensionalen, einer zweidimensionalen oder einer mehrdimensionalen Ortskoordinate und/oder einer Zeitkoordinate ist.

11. Beleuchtungseinrichtung, eingerichtet zur Beleuchtung eines Gegenstands mit einer strukturierten Beleuchtung, wobei ein Bestrahlungsstärkeprofil der strukturierten Beleuchtung auf einem durch eine Modulationsfunktion gemäß eines Modulationsverfahrens modulierten Trägersignal basiert, wobei als Trägersignal eine periodische Funktion verwendet wird, wobei als Modulationsfunktion eine Gauss-Funktion, eine Gauss-förmige Funktion oder eine näherungsweise Gauss-förmige Funktion verwendet wird, wobei die Modulationsfunktion eine im Ortsraum gegebene Funktion ist, durch welche die örtliche Variation der Bestrahlungsstärke des Trägersignals verändert wird, wobei die Beleuchtungseinrichtung einen Projektor umfasst, **dadurch gekennzeichnet, dass** die Beleuchtungseinrichtung eine Maske oder ein Dia aufweist, die das Bestrahlungsstärkeprofil bereitstellen, wobei der Projektor und die Maske oder das Dia so angeordnet sind, dass die Maske oder das Dia in dem Projektor hinterleuchtet wird, sodass das Bestrahlungstärkeprofil auf die Oberfläche des zu erfassenden oder zu prüfenden Gegenstands projiziert wird.

12. Beleuchtungseinrichtung, eingerichtet zur Beleuchtung eines Gegenstands mit einer strukturierten Beleuchtung, wobei ein Bestrahlungsstärkeprofil der strukturierten Beleuchtung auf einem durch eine Modulationsfunktion gemäß eines Modulationsverfahrens modulierten Trägersignal basiert, wobei als Trägersignal eine periodische Funktion verwendet wird, wobei als Modulationsfunktion eine Gauss-Funktion, eine Gauss-förmige Funktion oder eine näherungsweise Gauss-förmige Funktion verwendet wird, wobei die Modulationsfunktion eine im Ortsraum gegebene Funktion ist, durch welche die örtliche Variation der Bestrahlungsstärke des Trägersignals verändert wird, **dadurch gekennzeichnet, dass** die Beleuchtungseinrichtung einen ansteuerbaren Projektor und eine Recheneinrichtung aufweist, wobei die Beleuchtungseinrichtung eingerichtet ist, um den ansteuerbaren Projektor durch die Recheneinrichtung mit dem Bestrahlungsstärkeprofil anzusteuern, sodass das Bestrahlungsstärkeprofil auf eine Oberfläche des zu prüfenden oder zu erfassenden Gegenstands projiziert wird.

13. Beleuchtungseinrichtung nach einem der Ansprüche 11 oder 12, wobei die Beleuchtungseinrichtung zusätzlich einen drehbaren Spiegel, einen Taumelspiegel oder einen Galvanometerscanner, zur zeitlich variablen Projektion der strukturierten Beleuchtung aufweist.

**Claims**

1. Method for optical shape detection and/or shape inspection of an object, wherein a structured illumination is used, wherein an irradiance profile of the structured illumination is provided which is based on a carrier signal modulated by a modulation function according to a modulation method, wherein

   - as carrier signal a periodic function with a sequence of periods is used, wherein
   - a Gaussian function, a Gaussian-shaped function or an approximately Gaussian-shaped function is used as modulation function, wherein
   - the modulation function is a function given in spatial space by which the local variation of the irradiance of the carrier signal is changed, and
   - a light-sectioning method, a method of stripe projection, and/or a method of deflectometry is performed

   **characterized in that**

   - the modulation function is used to make periods of the carrier signal distinguishable from one another.

2. Method according to claim 1, **characterized in that** an analog modulation method is used as modulation method.

3. Method according to one of the preceding claims, **characterized in that** a digital modulation method is used as modulation method.

4. Method according to one of the preceding claims, **characterized in that** a cosine-shaped or sine-shaped signal is used as carrier signal.

5. Method according to one of the preceding claims, **characterized in that** an offset is added to the carrier signal, in particular an offset such that the sum of carrier signal and offset does not assume negative functional values.

6. Method according to one of the preceding claims, **characterized in that** a method for amplitude modulation, a method for frequency modulation and/or a method for phase modulation is used as modulation method.

7. Method according to one of the preceding claims, **characterized in that** an approximately Gaussian-shaped function of finite extent is used as modulation function, preferably an analog modulation method being used as modulation method.

8. Method according to one of the preceding claims, **characterized in that** a digital modulation method, a phase-shift keying method (PSK), a binary phase-shift keying method (BPSK), a quadrature phase-shift keying method (QPSK), a differential phase-shift keying method (DPSK), and/or a quadrature amplitude modulation method (QAM) is additionally used as modulation method.

9. Method according to one of the preceding claims, **characterized in that** the shape detection method is a stationary light-sectioning method or a moving light-sectioning method, a stationary stripe projection method or a moving stripe projection method, and/or a stationary deflectometry method or a moving deflectometry method.

10. Method according to one of the preceding claims, **characterized in that** an irradiance profile is used which is a function of a one-dimensional, a two-dimensional or a multi-dimensional location coordinate and/or a time coordinate.

**11.** Illumination device adapted for illuminating an object with a structured illumination, wherein an irradiance profile of the structured illumination is based on a carrier signal modulated by a modulation function according to a modulation method, wherein a periodic function is used as carrier signal, wherein a Gaussian function, a Gaussian-shaped function or an approximately Gaussian-shaped function is used as modulation function, wherein the modulation function is a function given in spatial space, by which the local variation of the irradiance of the carrier signal is changed, the illumination device comprising a projector, **characterized in that** the illumination device comprises a mask or a slide providing the irradiance profile, the projector and the mask or the slide being arranged such that the mask or the slide is backlit in the projector so that the irradiance profile is projected onto the surface of the object to be detected or inspected.

**12.** Illumination device adapted for illuminating an object with a structured illumination, wherein an irradiance profile of the structured illumination is based on a carrier signal modulated by a modulation function according to a modulation method, wherein a periodic function is used as the carrier signal, wherein a Gaussian function, a Gaussian-shaped function or an approximately Gaussian-shaped function is used as the modulation function, wherein the modulation function is a function given in spatial space, by which the local variation of the irradiance of the carrier signal is changed, **characterized in that** the illumination device comprises a controllable projector and a computing device, the illumination device being adapted to control the controllable projector by the computing device with the irradiance profile so that the irradiance profile is projected onto a surface of the object to be inspected or detected.

**13.** Illumination device according to one of the claims 11 or 12, wherein the illumination device additionally comprises a rotatable mirror, a wobble mirror or a galvanometer scanner, for time-variable projection of the structured illumination.

**Revendications**

**1.** Procédé de détection et/ou de contrôle optique de la forme d'un objet, dans lequel un éclairage structuré est utilisé, dans lequel un profil d'irradiance de l'éclairage structuré est fourni, qui est basé sur un signal porteur modulé par une fonction de modulation selon un procédé de modulation, dans lequel

  - une fonction périodique avec une succession de périodes est utilisée comme signal porteur, dans laquelle
  - une fonction de Gauss, une fonction en forme de Gauss ou une fonction approximativement en forme de Gauss est utilisée comme fonction de modulation, dans laquelle
  - la fonction de modulation est une fonction donnée dans l'espace local, par laquelle la variation locale d'irradiance du signal porteur est changée, et
  - un procédé d'intersection de lumière, un procédé de projection de franges et/ou un procédé de déflectométrie est réalisé,

  **caractérisé en ce que**

  - la fonction de modulation est utilisée pour rendre des périodes du signal porteur distinctes les unes des autres.

**2.** Procédé selon la revendication 1, **caractérisé en ce que** le procédé de modulation utilisé est un procédé de modulation analogue.

**3.** Procédé selon l'une des revendications précédentes, **caractérisé en ce qu'**un procédé de modulation numérique est utilisé comme procédé de modulation.

**4.** Procédé selon l'une des revendications précédentes, **caractérisé en ce qu'**un signal en forme de cosinus ou de sinus est utilisé comme signal porteur.

**5.** Procédé selon l'une des revendications précédentes, **caractérisé en ce qu'**un décalage est ajouté au signal porteur, en particulier un décalage tel que la somme du signal porteur et du décalage ne prenne pas de valeurs fonctionnelles négatives.

**6.** Procédé selon l'une des revendications précédentes, **caractérisé en ce que** le procédé de modulation utilisé est un procédé de modulation d'amplitude, un procédé de modulation de fréquence et/ou un procédé de modulation de phase.

**7.** Procédé selon l'une des revendications précédentes, **caractérisé en ce que** la fonction de modulation utilisée est une fonction approximativement en forme de Gauss d'extension finie, un procédé de modulation analogique étant de préférence utilisé comme procédé de modulation.

**8.** Procédé selon l'une des revendications précédentes, **caractérisé en ce que** le procédé de modulation utilisé est en outre un procédé de modulation numérique, un procédé de modulation par changement de phase (PSK), un procédé de modulation par changement de phase binaire (BPSK), un procédé de modulation par changement de phase en quadrature (QPSK), un procédé de modulation par changement de phase différentielle (DPSK), et/ou un procédé de modulation d'amplitude en quadrature (QAM).

**9.** Procédé selon l'une des revendications précédentes, **caractérisé en ce que** le procédé de détection de forme est un procédé d'intersection de lumière à l'arrêt ou un procédé d'intersection de lumière en mouvement, un procédé de projection de franges à l'arrêt ou un procédé de projection de franges en mouvement, et/ou un procédé de déflectométrie à l'arrêt ou un procédé de déflectométrie en mouvement.

**10.** Procédé selon l'une des revendications précédentes, **caractérisé en ce que** le profil d'irradiance utilisé est une fonction d'une coordonnée de lieu unidimensionnelle, bidimensionnelle ou multidimensionnelle et/ou d'une coordonnée de temps.

**11.** Dispositif d'éclairage, conçu pour éclairer un objet avec un éclairage structuré, un profil d'irradiance de l'éclairage structuré étant basé sur un signal porteur modulé par une fonction de modulation selon un procédé de modulation, une fonction périodique étant utilisée comme signal porteur, une fonction de Gauss, une fonction en forme de Gauss ou une fonction approximativement en forme de Gauss étant utilisée comme fonction de modulation, la fonction de modulation étant une fonction donnée dans l'espace local, par laquelle la variation locale d'irradiance du signal porteur est changée, le dispositif d'éclairage comprenant un projecteur, **caractérisé en ce que** le dispositif d'éclairage présente un masque ou une diapositive fournissant le profil d'irradiance, le projecteur et le masque ou la diapositive étant agencés de telle sorte que le masque ou la diapositive est rétroéclairé dans le projecteur, de sorte que le profil d'irradiance est projeté sur la surface de l'objet à détecter ou à inspecter.

**12.** Dispositif d'éclairage, conçu pour éclairer un objet avec un éclairage structuré, un profil d'irradiance de l'éclairage structuré étant basé sur un signal porteur modulé par une fonction de modulation selon un procédé de modulation, une fonction périodique étant utilisée comme signal porteur, une fonction de Gauss, une fonction en forme de Gauss ou une fonction approximativement en forme de Gauss étant utilisée comme fonction de modulation, la fonction de modulation étant une fonction donnée dans l'espace local, par laquelle la variation locale d'irradiance du signal porteur est changée, **caractérisé en ce que** le dispositif d'éclairage présente un projecteur commandable et un dispositif de calcul, le dispositif d'éclairage étant conçu pour commander le projecteur commandable par le dispositif de calcul avec le profil d'irradiance, de sorte que le profil d'irradiance est projeté sur une surface de l'objet à contrôler ou à détecter.

**13.** Dispositif d'éclairage selon l'une des revendications 11 ou 12, dans lequel le dispositif d'éclairage présente en outre un miroir rotatif, un miroir oscillant ou un scanner galvanométrique, pour la projection variable dans le temps de l'éclairage structuré.

Fig. 1

Stand der Technik

a)

b)

Fig. 2

Stand der Technik

a)

b)

Fig. 3

a)

b)

Fig. 4

a)      b)

a)      Fig. 5      b)

Fig. 6      Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130016338 A1
- US 4657394 A
- US 20090016572 A1
- DE 102009056177 A1
- EP 1949673 A1